# EUROPÄISCHE PATENTSCHRIFT

(11) **EP 2 901 674 B1**
(45) Veröffentlichungstag und Bekanntmachung des Hinweises auf die Patenterteilung: **21.03.2018**
(21) Anmeldenummer: 13728954.2
(22) Anmeldetag: 07.05.2013
(51) Int. Cl.: H04N 13/04, G02B 27/22

(54) **VERFAHREN ZUM WIEDERGEBEN VON BILDINFORMATIONEN UND AUTOSTEREOSKOPISCHER BILDSCHIRM**
METHOD FOR RENDERING IMAGE INFORMATION AND AUTOSTEREOSCOPIC DISPLAY
PROCÉDÉ D'AFFICHAGE D'INFORMATIONS D'IMAGE ET ÉCRAN AUTOSTÉRÉOSCOPIQUE

(30) Priorität: 26.09.2012 DE 102012217440
(43) Veröffentlichungstag der Anmeldung: 05.08.2015
(73) Patentinhaber: Fraunhofer Gesellschaft zur Förderung der angewandten Forschung e.V., 80686 München (DE)
(72) Erfinder: DE LA BARRÉ, René, 09648 Mittweida (DE); JURK, Silvio, 10247 Berlin (DE)
(74) Vertreter: Pfenning, Meinig & Partner mbB
(86) Internationale Anmeldenummer: PCT/EP2013/001383
(87) Internationale Veröffentlichungsnummer: WO 2014/048512

(56) Entgegenhaltungen:
- EP-A1- 2 296 029
- EP-A2- 2 040 478
- US-A1- 2008 239 482
- US-A1- 2012 200 677
- US-A1- 2012 229 610

## Beschreibung

Die Erfindung betrifft ein Verfahren zum Wiedergeben von Bildinformationen auf einem autostereoskopischen Bildschirm sowie einen zur Durchführung dieses Verfahrens geeigneten autostereoskopischen Bildschirm.
Dabei betrifft die Erfindung die Verwendung eines autostereoskopischen Bildschirms an sich bekannter Art. Bildschirme dieser Art werden als Multview-Displays bezeichnet. Ein solcher Bildschirm (bekannt z.B. aus der europäischen Patentanmeldung EP 2 040 478 A2) weist eine Pixelmatrix mit einer Vielzahl von Pixeln sowie ein vor der Pixelmatrix angeordnetes optisches Raster auf. Dabei sind die Pixel der Pixelmatrix so angeordnet, dass sie eine Vielzahl von äquidistant nebeneinander angeordneten Spalten mit einer vertikalen oder gegenüber einer Vertikalen geneigten Spaltenrichtung bilden, wobei das optische Raster eine Schar von parallel zu den Spalten orientierten und äquidistant nebeneinander angeordneten streifenförmigen Strukturen aufweist und von den Pixeln ausgehendem Licht jeweils mindestens eine definierte Ausbreitungsebene vorgibt, die aus einer definierten horizontalen Ausbreitungsrichtung und der Spaltenrichtung aufgespannt wird. Eine durch einen seitlichen Versatz benachbarter streifenförmiger Strukturen definierte Periodenlänge des optischen Rasters ist bei einem autostereoskopischen Bildschirm dieser Art um einen Faktor n×Lₙ/(Lₙ+a) größer als ein seitlicher Versatz der unmittelbar benachbarten Spalten, wobei a einen effektiven Abstand zwischen der Pixelmatrix und dem optischen Raster, Lₙ eine nominale Betrachtungsentfernung des autostereoskopischen Bildschirms und n eine ganzzahlige Zahl größer als zwei bezeichnet. Dabei wird der Abstand a in der hier gewählten Terminologie als effektiver Abstand bezeichnet, weil das optische Raster eine endliche Tiefe hat, was und unter Umständen auch für die Pixel der Pixelmatrix gilt. Welchen Betrag der genannte effektive Abstand hat, lässt sich daher unter Umständen mit letzter Genauigkeit erst durch Auswerten der weiter unten beschriebenen optischen Eigenschaften des Bildschirms, insbesondere durch Analysieren einer Lage der sogenannten Betrachtungszonen, ermitteln.

Bei einer herkömmlichen Verwendung solcher Multiview-Bildschirme werden die Spalten von Pixeln in zyklischer Reihenfolge von links nach rechts auf n Untermengen verteilt, wobei dann auf jeder dieser n Untermengen eines von n stereoskopischen Halbbildern wiedergegeben wird. Die geometrischen Eigenschaften des Bildschirms führen dann wegen des oben genannten Zusammenhangs zwischen der Periodenlänge des optischen Rasters und dem seitlichen Versatz der Spalten von Pixeln dazu, dass sich in der nominalen Betrachtungsentfernung Lₙ vor dem Bildschirm n nebeneinander liegende Betrachtungszonen ergeben, aus denen jeweils eines der Halbbilder sichtbar ist. Typischerweise wird der Bildschirm dabei so dimensioniert, dass ein seitlicher Versatz der unmittelbar benachbarten Betrachtungszonen dabei ungefähr so groß wie oder unwesentlich größer als ein Augenabstand eines durchschnittlichen Augenpaars ausfällt. Der seitliche Versatz benachbarter Betrachtungszonen kann aber unter Umständen auch viel kleiner sein und beispielsweise einem halben oder einem viertel Augenabstand entsprechen. Die genannten stereoskopischen Halbbilder werden nun so zueinander komplementär gewählt, dass sich die ganz oder partiell sichtbaren Halbbilder zu jeweils einem Stereobild ergänzen. Die Halbbilder geben dazu jeweils die gleiche wiederzugebende Szene wieder und unterscheiden sich nur durch unterschiedliche Paralaxen voneinander. Jeder Betrachter, der so vor dem Bildschirm platziert ist, dass sich seine Augen innerhalb eines durch die Betrachtungszonen aufgespannten Bereichs und dort in zwei verschiedenen Betrachtungszonen befinden, kann die Szene dadurch autostereoskopisch - also ohne weitere Hilfsmittel - in einer dreidimensional erscheinenden Weise wahrnehmen.
Der Bereich, aus dem die wiedergegebene Szene dreidimensional wahrgenommen werden kann, ist bei dem beschriebenen Stand der Technik jedoch sehr beschränkt, und zwar insbesondere auf einen relativ engen Entfernungsbereich um die erwähnte nominale Betrachtungsentfernung. Sobald der Betrachter den genannten Bereich verlässt, insbesondere wenn seine Entfernung zum Bildschirm mehr als nur geringfügig von der nominalen Betrachtungsentfernung abweicht, wird der dreidimensionale Eindruck verloren gehen oder zumindest verfälscht werden und in jedem Fall die Bildqualität beträchtlich schlechter werden.
Der Erfindung liegt daher die Aufgabe zugrunde, ein Verfahren zum Wiedergeben von Bildinformationen auf einem Bildschirm vorzuschlagen, das die wiedergegebene Szene aus einem möglichst großen Bereich, innerhalb dessen sich ein Betrachter in möglichst weiten Grenzen frei bewegen können soll, in möglichst guter Qualität autostereoskopisch dreidimensional wahrzunehmen erlaubt. Der Erfindung liegt ferner die Aufgabe zugrunde, einen autostereoskopischen Bildschirm vorzuschlagen, der eine Bildwiedergabe möglich macht, die diesen Anforderungen genügt.
Diese Aufgabe wird erfindungsgemäß gelöst durch ein Verfahren zum Wiedergeben von Bildinformationen auf einem autostereoskopischen Bildschirm mit den Merkmalen des Anspruchs 1 sowie durch einen autostereoskopischen Bildschirm mit den Merkmalen des Anspruchs 8. Vorteilhafte Ausgestaltungen und Weiterentwicklungen der Erfindung ergeben sich mit den Merkmalen der Unteransprüche.
Vorgeschlagen wird also ein Verfahren zum Wiedergeben von Bildinformationen auf einem autostereoskopischen Bildschirm, der wie die eingangs beschriebenen Bildschirme eine Pixelmatrix mit einer Vielzahl von Pixeln sowie ein vor der Pixelmatrix angeordnetes optisches Raster aufweist, wobei die Pixel der Pixelmatrix so angeordnet sind, dass sie eine Vielzahl von äquidistant nebeneinander angeordneten Spalten mit einer vertikalen oder gegenüber einer Vertikalen geneigten Spaltenrichtung bilden, und wobei das optische Raster eine Schar von parallel zu den Spalten orientierten und äquidistant nebeneinander angeordneten streifenförmigen Strukturen aufweist und von den Pixeln ausgehendem Licht jeweils mindestens eine definierte Ausbreitungsebene vorgibt, die aus einer definierten horizontalen Ausbreitungsrichtung und der Spaltenrichtung aufgespannt wird, wobei eine durch einen seitlichen Versatz benachbarter streifenförmiger Strukturen definierte Periodenlänge des optischen Rasters um einen Faktor n×Lₙ/(Lₙ+a) größer ist als ein seitlicher Versatz der unmittelbar benachbarten Spalten, wobei a einen effektiven Abstand zwischen der Pixelmatrix und dem optischen Raster, Lₙ eine nominale Betrachtungsentfernung des autostereoskopischen Bildschirms und n eine ganzzahlige Zahl größer als zwei - typischerweise deutlich größer als zwei, beispielweise acht oder größer - bezeichnet. Dabei umfasst das Verfahren folgende Schritte:
- Zuordnen jeweils eines Winkelwertes und jeweils eines Ortskoordinatenwertes zu jeder der genannten Spalten, wobei der Winkelwert definiert ist als Maß für einen Winkel zwischen einer horizontalen Referenzrichtung und der horizontalen Ausbreitungsrichtung oder einer der horizontalen Ausbreitungsrichtungen, die dem von den Pixeln der jeweiligen Spalte ausgehenden Licht durch das optische Raster vorgegeben wird oder werden, und wobei der Ortskoordinatenwert eine Lage der jeweiligen Spalte oder der streifenförmigen Struktur des optischen Rasters, durch die das von den Pixeln dieser Spalte ausgehende Licht fällt, in lateraler Richtung angibt,
- für jede der Spalten Berechnen jeweils eines Auszugs eines Bildes durch Bildsynthese, wobei dieses Bild jeweils eine Parallelprojektion einer wiederzugebenden 3D-Szene ist mit einer Projektionsrichtung, die durch den Winkel definiert ist, der dem der jeweiligen Spalte zugeordneten Winkelwert entspricht, und wobei der Auszug jeweils durch einen Streifen dieses Bildes definiert ist, der in diesem Bild eine seitliche Lage hat, die dem der jeweiligen Spalte zugeordneten Ortskoordinatenwert entspricht, und
- Ansteuern der Pixel der Pixelmatrix derart, dass in jede der Spalten der für diese Spalte berechnete Auszug eingeschrieben wird.
Dadurch ergibt sich eine Situation, die dem sogenannten "Integral Imaging" vergleichbar ist und in der ein Betrachter in einem verhältnismäßig großen Bereich vor dem Bildschirm unabhängig von seiner genauen Position innerhalb dieses Bereichs und auch zumindest innerhalb sehr weiter Grenzen unabhängig von einer Entfernung des Betrachters vom Bildschirm die wiedergegebene Szene autostereoskopische dreidimensional wahrnehmen kann, und zwar jeweils aus einer Perspektive, die seiner aktuellen Position innerhalb des genannten Bereichs entspricht und die sich bei einer Bewegung des Betrachters mit dieser Position ändert. Durch die beschriebene Ansteuerung der Pixel ergibt sich nämlich in dem Bereich vor dem Bildschirm ein Lichtfeld, das sehr ähnlich dem Lichtfeld ist, das die wiedergegebene Szene in Realität verursachen würde. Die Augen des Betrachters sehen dabei innerhalb des genannten Bereichs jeweils Beiträge einer großen Zahl der oben genannten Auszüge und dementsprechend, insofern genau wie beim an sich bekannten Integral Imaging, eine Mischung aus verschiedenen Parallelprojektionen, wobei diese Mischung genau einer realistischen Perspektive entspricht, bei der jedes Auge typischerweise eine von zwei Zentralprojektionen sieht, die sich durch eine dem Augenabstand entsprechende Parallaxenverschiebung voneinander unterscheiden.
Gegenüber dem an sich bekannten Integral Imaging kann das vorgeschlagene Verfahren jedoch mit einem herkömmlichen Multiview-Display realisiert werden, der - wegen des oben genannten und für Multiview-Display typischen Zusammenhangs zwischen Periodenlänge des optischen Rasters und dem seitlichen Versatz benachbarter Pixelspalten - nicht die besonderen geometrischen Bedingungen erfüllt, die von einem für Integral Imaging geeigneten Display gefordert werden. Diese sind nämlich so konfiguriert, dass sie eine bestimmte Anzahl von Kanälen haben, auf denen jeweils eines von einer entsprechenden Anzahl - vollständiger und nicht nur auszugsweise wiedergegebener- Parallelprojektionen wiedergegeben wird, wobei jeder dieser Kanäle - anders als beim hier beschriebenen Bildschirm - als Schar paralleler Lichtbündel abstrahlt.

Die vorgeschlagene Erfindung ermöglicht also in vorteilhafter Weise eine dem Integral Imaging entsprechende und mit entsprechender Bildtiefe und Bewegungsfreiheit für den oder die Betrachter verbundene Bildwiedergabe unter Verwendung eines herkömmlichen Multiview-Displays, das bei Bedarf aus einer großen Zahl kommerzieller erhältlicher kostengünstiger Bildschirme ausgewählt werden kann. Die Erfindung kann dabei ganz verschiedene Anwendungen finden, beispielsweise zur Bildwiedergabe bei Computer-Spielen oder bei CAD-Verfahren. Die wiederzugebende 3D-Szene kann selbstverständlich auch bewegt sein, so dass es sich bei den Bildern, deren Auszüge berechnet und in die Spalten der Pixelmatrix eingeschrieben werden, dementsprechend um bewegte Bilder handeln kann.

Dementsprechend vorteilhaft ist der vorgeschlagene autostereoskopische Bildschirm, mit dem in beschriebener Weise Bildinformationen wiedergegeben werden können. Dieser autostereoskopische Bildschirm weist eine Pixelmatrix mit einer Vielzahl von Pixeln ein vor der Pixelmatrix angeordnetes optisches Raster und eine Steuereinheit zum Ansteuern der Pixelmatrix auf, wobei die Pixel der Pixelmatrix so angeordnet sind, dass sie eine Vielzahl von äquidistant nebeneinander angeordneten Spalten mit einer vertikalen oder gegenüber einer Vertikalen geneigten Spaltenrichtung bilden, wobei das optische Raster eine Schar von parallel zu den Spalten orientierten und äquidistant nebeneinander angeordneten streifenförmigen Strukturen aufweist und von den Pixeln ausgehendem Licht jeweils mindestens eine definierte Ausbreitungsebene vorgibt, die aus einer definierten horizontalen Ausbreitungsrichtung und der Spaltenrichtung aufgespannt wird, wobei eine durch einen seitlichen Versatz benachbarter streifenförmiger Strukturen definierte Periodenlänge des optischen Rasters um einen Faktor n×Lₙ/(Lₙ+a) größer ist als ein seitlicher Versatz der unmittelbar benachbarten Spalten, wobei a einen effektiven Abstand zwischen der Pixelmatrix und dem optischen Raster, Lₙ eine nominale Betrachtungsentfernung des autostereoskopischen Bildschirms und n eine ganzzahlige Zahl größer als zwei bezeichnet, und wobei die Steuereinheit eingerichtet ist zur Durchführung
folgender Schritte:
- Berechnen oder Auswerten einer Zuordnung, die jeder der genannten Spalten jeweils einen Winkelwert und jeweils einen Ortskoordinatenwert zuordnet, wobei der Winkelwert definiert ist als Maß für einen Winkel zwischen einer horizontalen Referenzrichtung und der horizontalen Ausbreitungsrichtung oder einer der horizontalen Ausbreitungsrichtungen, die dem von den Pixeln der jeweiligen Spalte ausgehenden Licht durch das optische Raster vorgegeben wird oder werden, und wobei der Ortskoordinatenwert eine Lage der jeweiligen Spalte oder der streifenförmigen Struktur des optischen Rasters, durch die das von den Pixeln dieser Spalte ausgehende Licht fällt, in lateraler Richtung angibt,
- für jede der Spalten Berechnen jeweils eines Auszugs eines Bildes durch Bildsynthese, wobei dieses Bild jeweils eine Parallelprojektion einer wiederzugebenden 3D-Szene ist mit einer Projektionsrichtung, die durch den Winkel definiert ist, der dem der jeweiligen Spalte zugeordneten Winkelwert entspricht, und wobei der Auszug jeweils durch einen Streifen dieses Bildes definiert ist, der in diesem Bild eine seitliche Lage hat, die dem der jeweiligen Spalte zugeordneten Ortskoordinatenwert entspricht, und
- Ansteuern der Pixel der Pixelmatrix derart, dass in jede der Spalten der für diese Spalte berechnete Auszug eingeschrieben wird.
Typischerweise ist die Steuereinheit dabei eingerichtet, beim Berechnen der Auszüge Helligkeitswerte von Bildpunkten der Auszüge zu ermitteln und die Auszüge in die Spalten der Pixelmatrix einzuschreiben durch Ansteuern der die jeweilige Spalte bildenden Pixel mit den für die Bildpunkte des jeweiligen Auszugs ermittelten Helligkeitswerten. Selbstverständlich kann die Pixelmatrix dabei Pixel unterschiedlicher Grundfarben - typischerweise rote, grüne und blaue Pixel - aufweisen, die dementsprechend mit farbabhängigen Helligkeitswerten angesteuert werden können und von denen typischerweise drei zu einer farbigen bzw. farbneutralen Pixelgruppe zusammengefasst werden können. Die Pixelmatrix kann z.B. durch einen Flüssigkristall-Bildschirm oder einen LED-Bildschirm oder einen Plasmabildschirm gegeben sein. Bei dem optischen Raster wiederum kann es sich beispielsweise um ein Linsenraster oder ein Schlitzraster handeln, wobei die streifenförmigen Strukturen durch Zylinderlinsen oder zylinderlinsenartige Linsen oder durch transparente Schlitze gegeben sein können.

Das Berechnen der Auszüge kann also das Ermitteln von Helligkeitswerten von Bildpunkten der Auszüge beinhalten, wobei die Auszüge in die Spalten der Pixelmatrix eingeschrieben werden, indem die die jeweilige Spalte bildenden Pixel mit den für die Bildpunkte des jeweiligen Auszugs ermittelten Helligkeitswerten angesteuert werden. Die zum Berechnen der Auszüge verwendete Bildsynthese, auch als Rendern bezeichnet, kann in gleicher Weise durchgeführt werden wie beim an sich bekannten Integral Imaging. Dazu können also herkömmliche Render-Verfahren verwendet werden, wobei sich gegenüber herkömmlichen Anwendungen solcher Render-Verfahren oder Bildsynthese Verfahren kein rechnerischer Mehraufwand ergibt, weil die verhältnismäßig große Zahl von Parallelprojektionen nicht vollständig berechnet werden müssen, sondern es vielmehr genügt, wenn die genannten Auszüge, also jeweils verhältnismäßig kleine Teile dieser Parallelprojektionen, berechnet werden.

Das Zuordnen der Winkelwerte zu den Spalten kann so erfolgen, dass den verschiedenen Spalten eine Anzahl von typischerweise sogar weit mehr als n verschiedenen Winkelwerten zugeordnet werden, so dass die für die Spalten berechneten Auszüge aus einer entsprechenden Anzahl von mehr als n verschiedenen Parallelprojektionen mit einer entsprechenden Anzahl von mehr als n verschiedenen Projektionsrichtungen berechnet werden. Es spricht also nichts dagegen, die genannten Winkel den geometrischen Eigenschaften des Bildschirms entsprechend mit ausgesprochen hoher Genauigkeit zu ermitteln. Auch bei dem vorgeschlagenen autostereoskopischen Bildschirm kann die genannte Zuordnung den verschiedenen Spalten also eine Anzahl von mehr als n verschiedenen Winkelwerten zuordnen, so dass die Steuereinheit eingerichtet ist, die Auszüge für die verschiedenen Spalten der Pixelmatrix aus einer entsprechenden Anzahl von mehr als n verschiedenen Parallelprojektionen mit einer entsprechenden Anzahl von mehr als n verschiedenen Projektionsrichtungen zu berechnen. Je genauer die Winkelwerte dabei bestimmt werden und je feiner gestufte Zwischenwerte zugelassen werden, desto besser wird die dabei realisierbare Bildqualität sein. Die Ermittlung der Winkelwerte ist dabei unabhängig von der geforderten Genauigkeit eine einfache zu lösende strahlengeometrische Aufgabe. Natürlich werden die Pixel eine unter Umständen nicht vernachlässigbare endliche Ausdehnung haben. Auch wird das von den Pixeln ausgehende und durch das optische Raster fallende Licht wegen der endlichen seitlichen Ausdehnung der streifenförmigen Strukturen normalerweise immer geringfügig seitlich aufgefächert sein. Zur Bestimmung der genannten Ausbreitungsebenen und Ausbreitungsrichtungen sollte dann jeweils von einem mittig im jeweiligen Pixel liegenden Punkt - beispielsweise einem Flächenschwerpunkt des Pixels - ausgegangen werden, wobei die Ausbreitungsrichtung so definiert sei, dass die durch die Ausbreitungsrichtung und durch die Spaltenrichtung definierte Ausbreitungsebene mittig in einem von dem jeweiligen Pixel ausgehenden Lichtfächer liegt.

Die Projektionsrichtungen der Parallelprojektionen, deren Auszüge für die verschiedenen Spalten berechnet werden, werden zweckmäßigerweise so gewählt, dass sie mit einer für alle diese Parallelprojektionen gemeinsamen Referenzprojektionsrichtung jeweils einen Winkel einschließen, der genauso groß ist wie der Winkel, der dem der jeweiligen Spalte zugeordneten Winkelwert entspricht, oder der sich durch Multiplikation des letztgenannten Winkels mit einem für alle diese Parallelprojektionen gemeinsamen Proportionalitätsfaktor ergibt. Als Referenzprojektionsrichtung kann dabei z.B. eine Richtung gewählt werden die einer frontalen Blickrichtung auf die Szene entspricht. Dabei sollte die Referenzprojektionsrichtung abhängig von und entsprechend zur oben genannten horizontalen Referenzrichtung gewählt werden, die im beispielhaft genannten Fall als senkrecht auf einer durch die Pixelmatrix bzw. durch das optische Raster aufgespannten Ebene stehend gewählt werden kann. Wenn der Winkel zwischen der Projektionsrichtung und der Referenzprojektionsrichtung genauso groß gewählt wird wie der Winkel, der dem der jeweiligen Spalte zugeordneten Winkelwert entspricht, ergibt sich eine besonders naturgetreu wirkende dreidimensionale Darstellung, wobei wiedergegebene Objekte bei einer Bewegung des Betrachters still stehen bleiben. Wird dagegen ein von eins abweichender Proportionalitätsfaktor gewählt, kann sich der Effekt ergeben, dass sich wiedergegebene Szenen bzw. Objekte bei einer Bewegung des Betrachters der Bewegung entsprechend mit zu drehen oder entgegen dieser Bewegung zu drehen scheinen. Die Projektionsrichtung kann man sich jeweils als virtuelle Kamerablickrichtung vorstellen, die zur Aufnahme des jeweiligen Bildes vorgesehen werden müsste.

Dementsprechend kann die Steuereinheit des vorgeschlagenen autostereoskopischen Bildschirms eingerichtet sein, die Auszüge für die verschiedenen Spalten so zu berechnen, dass die Projektionsrichtungen der Parallelprojektionen, um deren Auszüge es sich handelt, mit einer für alle diese Parallelprojektionen gemeinsamen Referenzprojektionsrichtung jeweils einen Winkel einschließen, der genauso groß ist wie der Winkel, der dem der jeweiligen Spalte zugeordneten Winkelwert entspricht, oder der sich durch Multiplikation des letztgenannten Winkels mit einem für alle diese Parallelprojektionen gemeinsamen Proportionalitätsfaktor ergibt.

Typischerweise gibt das optische Raster dem von den Pixeln jeder Spalte oder zumindest den Pixeln einiger der Spalten ausgehenden Licht jeweils eine endliche Zahl verschiedener Ausbreitungsebenen mit dementsprechend verschiedenen horizontalen Ausbreitungsrichtungen vor, die sich dadurch ergeben, dass das Licht durch verschiedene der streifenförmigen Strukturen des optischen Rasters fällt. Zum Bestimmen des der jeweiligen Spalte zugeordneten Winkelwerts kann aus diesen Ausbreitungsrichtungen jeweils eine Ausbreitungsrichtung ausgewählt werden, die dadurch definiert ist, dass das von den Pixeln dieser Spalte ausgehende und mit dieser Ausbreitungsrichtung durch das optische Raster fallende Licht in einen vorgegebenen zusammenhängenden Beobachtungsraum vor dem Bildschirm fällt. Bei einer zweckmäßigen Ausführung des vorgeschlagenen autostereoskopischen Bildschirms ist die erwähnte Zuordnung also derart, dass der der jeweiligen Spalte zugeordnete Winkelwert durch eine ausgewählte Ausbreitungsrichtung aus diesen Ausbreitungsrichtungen definiert ist, wobei diese ausgewählte Ausbreitungsrichtung dadurch definiert ist, dass das von den Pixeln dieser Spalte ausgehende und mit dieser ausgewählten Ausbreitungsrichtung durch das optische Raster fallende Licht in einen vorgegebenen zusammenhängenden Beobachtungsraum vor dem Bildschirm fällt. Zweckmäßigerweise liegt der genannte Beobachtungsraum dabei innerhalb eines Bereichs, der ausgeleuchtet wird durch das Licht, das von einer Gruppe von n unmittelbar benachbarten und mittig durch die Pixelmatrix verlaufenden Spalten von Pixeln ausgeht und durch eine der streifenförmigen Strukturen des optischen Rasters fällt, die genau mittig vor dieser Gruppe von Spalten liegt.

Typische Ausführungen des vorgeschlagenen Verfahrens bzw. des vorgeschlagenen autostereoskopischen Bildschirms sehen vor, dass die Winkelwerte den Spalten so zugeordnet werden, dass die Spalten auf Gruppen von jeweils n oder auch n+1 oder zumindest n-1 unmittelbar benachbarten Spalten verteilt sind, innerhalb derer die den Spalten der jeweiligen Gruppe zugeordneten Winkelwerte sich von Spalte zu Spalte um eine für alle Gruppen gleiche Winkeldifferenz unterscheiden, wobei die Winkelwerte, die den Spalten jeder dieser Gruppen zugeordnet sind, jeweils ein Intervall überspannen, das mindestens (n-1)-mal so groß ist wie die genannte Winkeldifferenz. In der Regel werden die meisten der genannten Gruppen genau n Spalten umfassen, während einige Gruppen aus nur n-1 oder unter Umständen auch aus n+1 Spalten gebildet sind. Durch Ändern der Aufteilung der Spalten auf die genannten Gruppen kann der genannte Beobachtungsraum, aus dem die wiedergegebene 3D-Szene in guter Qualität autostereoskopisch sichtbar ist, entweder - auf Kosten einer Breite dieses Beobachtungsraums in größerer Entfernung vom Bildschirm - näher an den Bildschirm herangezogen werden oder - um den Preis einer größeren Mindestentfernung - in größerer Entfernung vom Bildschirm verbreitert werden.

Innerhalb des genannten Beobachtungsraums ist die 3D-Szene, die in beschriebener Weise wiedergegeben wird, mit verhältnismäßig guter Qualität sichtbar und autostereoskopisch dreidimensional wahrnehmbar. Insbesondere an Rändern dieses Beobachtungsraums können sich jedoch die Bildqualität mindernde Störungen ergeben, die typischerweise als in Spaltenrichtung - beispielsweise schräg-verlaufende und parallel nebeneinander liegende Streifen sichtbar werden. Ursache dieser Störungen ist ein Übersprechen zwischen benachbarten Spalten von Pixeln, in denen Auszüge von Bildern wiedergegeben werden, die Parallelprojektionen der 3D-Szene mit relativ stark unterschiedlicher Projektionsrichtungen entsprechen. Bei der beschriebenen Ansteuerung werden auf den nebeneinander liegenden Spalten von Pixeln Auszüge von Parallelprojektionen der 3D-Szene mit sich in den meisten Fällen jeweils nur geringfügig unterscheidenden Projektionsrichtungen wiedergegeben. Bei jedem etwa n-ten Spaltensprung jedoch ergibt sich ein wesentlich größerer Projektionsrichtungssprung - also ein größerer Sprung zwischen den diesen Spalten zugeordneten Winkelwerten - in entgegengesetzter Richtung, der zu der genannten Störung führen kann. Nachfolgend wird eine Maßnahme skizziert, die diese Störungen zumindest abzumildern erlaubt. Dabei werden in einige der Spalten gemittelte Intensitätswerte eingeschrieben. Das betrifft vorzugsweise jeweils eine von den unmittelbar benachbarten Spalten, in die Auszüge aus Parallelprojektionen stark abweichender Projektionsrichtung einzuschreiben sind, also die Spalten der Pixelmatrix, bei denen die genannten größeren Projektionsrichtungssprünge auftreten. Gemittelt wird dabei gerade zwischen Beiträgen der beiden Parallelprojektionen mit den Projektionsrichtungen, die dem rechten und dem linken Rand des genannten Beobachtungsraums vor dem Bildschirm entsprechen.

Um das zu realisieren, kann es also vorgesehen sein, dass zumindest einige der Spalten, die an einem Rand einer der zuvor genannten Gruppen von Spalten liegen, zusätzlich auch der sich an diesem Rand der Gruppe anschließenden benachbarten Gruppe von Spalten zugeordnet werden und dass diesen Spalten dementsprechend jeweils zwei Winkelwerte zugeordnet werden, die durch zwei der horizontalen Ausbreitungsrichtungen definiert werden, wobei für diese Spalten dementsprechend jeweils zwei Auszüge unter Zugrundelegung jeweils eines dieser beiden Winkelwerte berechnet werden und wobei die Pixel dieser Spalten jeweils mit einem gemittelten Helligkeitswert angesteuert werden, der sich durch Mitteln von Helligkeitswerten ergibt, die durch diese beiden Auszüge definiert werden. Die Steuereinheit kann also in diesem Fall eingerichtet sein, für jede der letztgenannten Spalten dementsprechend jeweils zwei Auszüge unter Zugrundelegung jeweils eines dieser beiden Winkelwerte zu berechnen und die Pixel dieser Spalten jeweils mit einem gemittelten Helligkeitswert anzusteuern, der sich durch Mitteln von Helligkeitswerten ergibt, die durch diese beiden Auszüge definiert werden.

Die genannten gemittelten Helligkeitswerte, mit denen die Pixel der Spalten angesteuert werden, denen zwei Winkelwerte zugeordnet und für die zwei Auszüge berechnet werden, werden typischerweise jeweils ermittelt als Summe aus einem mit einem ersten Wichtungsfaktor gewichteten ersten Helligkeitswert und einem mit einem zweiten Wichtungsfaktor gewichteten zweiten Helligkeitswert, wobei der erste Helligkeitswert durch einen ersten der zwei Auszüge für das jeweilige Pixel definiert ist und der zweite Helligkeitswert durch den zweiten dieser zwei Auszüge für dasselbe Pixel definiert ist. Natürlich ist es nicht ausgeschlossen, dass beide Wichtungsfaktoren einfach jeweils einen Wert von 0,5 haben. Der erste Wichtungsfaktor und der zweite Wichtungsfaktor können aber unter Umständen auch für jede der betroffenen Spalten von Pixeln jeweils abhängig davon definiert sein, wie nah an einer seitlichen Begrenzung des genannten Beobachtungsraums das von den Pixeln dieser Spalte ausgehende und mit der durch den jeweiligen Winkelwert definierten Ausbreitungsrichtung durch das optische Raster fallende Licht in den Beobachtungsraum fällt. Dadurch lässt sich eine noch bessere Unterdrückung der erwähnten Störungen erreichen. Und zwar sollte der jeweils für eine der Spalten definierte erste Wichtungsfaktor umso kleiner sein, je näher das von den Pixeln dieser Spalte ausgehende und mit der durch den ersten Winkelwert definierten Ausbreitungsrichtung durch das optische Raster fallende Licht an der nächstliegenden seitlichen Begrenzung des Beobachtungsraums in den Beobachtungsraum fällt. Der für die jeweilige Spalte definierte zweite Wichtungsfaktor sollte dementsprechend umso kleiner sein, je näher das von den Pixeln dieser Spalte ausgehende und mit der durch den zweiten Winkelwert definierten Ausbreitungsrichtung durch das optische Raster fallende Licht an der seitlichen Begrenzung des Beobachtungsraums in den Beobachtungsraum fällt. Dabei wird der zweite Wichtungsfaktor typischerweise umso größer sein, je kleiner der erste Wichtungsfaktor ist. Die Wichtungsfaktoren können z.B. so definiert sein, dass sich eine Summe aus dem ersten Wichtungsfaktor und dem zweiten Wichtungsfaktor für jede der betroffenen Spalten von Pixeln jeweils zu eins addieren. Die beschriebene Berechnung oder Ermittlung der gemittelten Helligkeitswerte und der dafür unter Umständen variabel definierten Wichtungsfaktoren kann durch die Steuereinheit erfolgen, die dazu entsprechend programmiert sein kann.

Ausführungsbeispiele der Erfindung werden nachfolgend anhand der Figuren 1 bis 9 erläutert. Es zeigt
- Fig. 1: Eine schematische Aufsicht auf einen autostereoskopischen Bildschirm und einen Betrachterraum vor diesem Bildschirm bei einer herkömmlichen Ansteuerung des Bildschirms,
- Fig. 2: eine frontale Ansicht eines Ausschnitts einer Pixelmatrix dieses Bildschirms,
- Fig. 3: in einer der Fig. 1 entsprechenden Darstellung eine Aufsicht auf den gleichen Bildschirm mit einem angestrebten Strahlengang, der dem sogenannten "Integral Imaging" entspricht,
- Fig. 4: einen vergrößerten Ausschnitt aus Fig. 3,
- Fig. 5: Eine schematische Aufsicht auf den autostereoskopischen Bildschirm aus Fig. 1 und den Betrachterraum vor diesem Bildschirm bei einer andersartigen Ansteuerung des Bildschirms in einer hier vorgeschlagenen Art,
- Fig. 6: einen vergrößerter Ausschnitt aus Fig. 5,
- Fig. 7: in einer der Fig. 5 entsprechenden Darstellung eine Aufsicht auf den gleichen Bildschirm bei einer abgewandelten Art der Ansteuerung,
- Fig. 8: einen vergrößerten Ausschnitt aus Fig. 7 und
- Fig. 9: eine der Fig. 8 entsprechende Darstellung, die eine weitere Abwandlung der Ansteuerung des Bildschirms veranschaulicht.

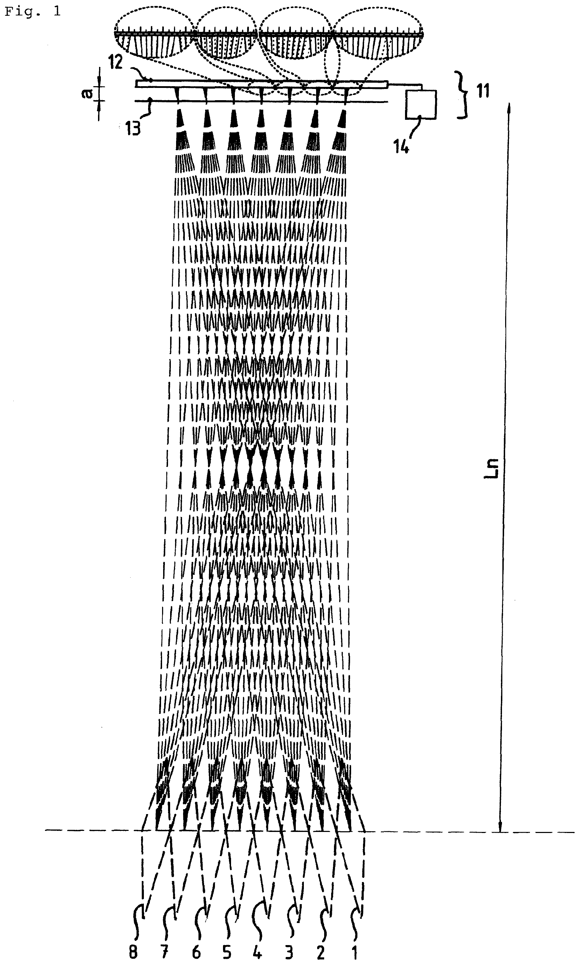

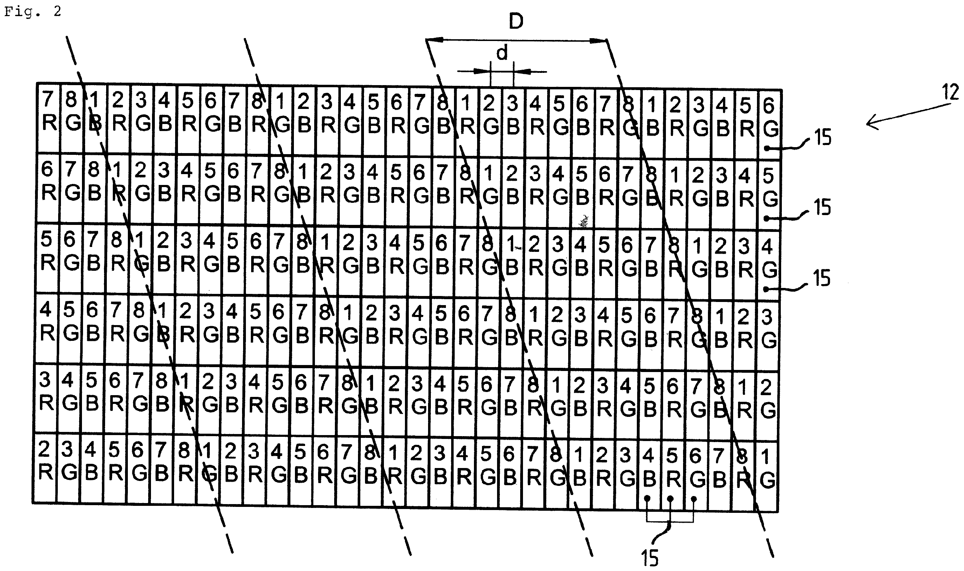

In Fig. 1 ist ein autostereoskopische Bildschirm 11 dargestellt, der eine Pixelmatrix 12, ein vor der Pixelmatrix 12 angeordnetes optisches Raster 13 und eine Steuereinheit 14 zum Ansteuern der Pixelmatrix 12 aufweist. Fig. 2 zeigt einen Ausschnitt der Pixelmatrix 12. Gleiche Merkmale sind in den verschiedenen Figuren jeweils mit den gleichen Bezugszeichen versehen und werden nicht im Zusammenhang mit jeder der Figuren erneut erläutert. Wie in Fig. 2 zu erkennen ist, weist die Pixelmatrix 12 eine Vielzahl von Pixeln 15 auf, wobei die Pixel 15 der Pixelmatrix 12 eine Vielzahl von äquidistant nebeneinander angeordneten Spalten mit einer im vorliegenden Fall gegenüber einer Vertikalen geneigten Spaltenrichtung bilden.

In Fig. 2 ist dabei eine Aufteilung der Pixel 15 auf acht Untermengen veranschaulicht, die bei einer herkömmlichen Verwendung eines Bildschirms 11 dieser Art vorgenommen wird. Bei dieser Aufteilung werden die genannten Spalten von Pixeln 15 in zyklischer Reihenfolge von links nach rechts auf die Untermengen verteilt. Die Untermengen sind dabei von 1 bis 8 durchnummeriert, wobei in Fig. 2 die Pixel 15 jeweils in einem oberen Teil mit einer Zahl von 1 bis 8 versehen sind, die der Nummer der Untermenge entspricht, der das jeweilige Pixel 15 zugeordnet ist. Dadurch ist insbesondere der geneigte Verlauf der Spalten erkennbar.

Im vorliegenden Fall handelt es sich bei den Pixeln 15 um Pixel 15 dreier verschiedener Grundfarben, die in Fig. 2 ihrer jeweiligen Grundfarbe entsprechend mit R für rot, G für grün oder B für Blau gekennzeichnet sind. In Spaltenrichtung ergänzen sich dabei jeweils drei übereinander angeordnete Pixel 15 zu einem farbneutralen bzw. zur Wiedergabe praktisch jeder beliebigen Farbe geeigneten Pixelgruppe. Selbstverständlich sind auch Abwandlungen denkbar, bei denen mehr als drei Farben zu einer Pixelgruppe gehören oder die Spalten einen vertikalen Verlauf haben, wobei dann die Pixel der verschiedenen Grundfarben entsprechend umsortiert auf der Pixelmatrix 12 anzuordnen sind. Bei der Pixelmatrix 12 kann es sich z.B. um einen Flüssigkristall-Bildschirm, also ein LCD, oder um einen durch eine Leuchtdiodenmatrix gebildeten LED-Bildschirm oder auch um einen Plasmabildschirm handeln.

Das optische Raster 13 weist eine Schar von parallel zu den Spalten von Pixeln 15 orientierten und äquidistant nebeneinander angeordneten streifenförmigen Strukturen auf, die in Fig. 2 durch gestrichelte Linien angedeutet sind und die von den Pixeln 15 ausgehendem Licht jeweils mindestens eine definierte Ausbreitungsebene vorgeben. Die Ausbreitungsebenen ergeben sich dabei durch eine fächerförmige Ausbreitung des von jedem der Pixel 15 ausgehenden und durch die Strukturen des optischen Rasters 13 fallenden Lichts und werden jeweils aus einer definierten horizontalen Ausbreitungsrichtung und der Spaltenrichtung aufgespannt. Eine durch einen seitlichen Versatz benachbarter streifenförmiger Strukturen definierte Periodenlänge D des optischen Rasters 13 ist im vorliegenden Ausführungsbeispiel um einen Faktor 8×Lₙ/(Lₙ+a) größer als ein seitlicher Versatz d der unmittelbar benachbarten Spalten, wobei a einen effektiven Abstand zwischen der Pixelmatrix 12 und dem optischen Raster 13, Lₙ eine nominale Betrachtungsentfernung des autostereoskopischen Bildschirms 11 bezeichnet. D ist also nicht ganz so groß wie das 8-fache des seitlichen Pixelabstands d. Bei Abwandlungen des beschriebenen Bildschirms 11, insbesondere im Fall einer höher aufgelösten Pixelmatrix 12, könnte natürlich auch eine größere ganzzahlige Zahl an die Stelle der Zahl 8 treten.

Das optische Raster 13 ist im vorliegenden Fall ein Linsenraster, wobei die streifenförmigen Strukturen durch Zylinderlinsen gegeben sind. Bei Abwandlungen des beschriebenen Bildschirms 11 könnten die genannten Strukturen auch durch transparente Schlitze und dementsprechend das optische Raster 13 durch ein Schlitzraster gegeben sein.

Bei der erwähnten herkömmlichen Verwendung des Bildschirms 11 in an sich bekannter Art wird auf jeder der acht Untermengen von Pixeln 15 eines von acht stereoskopischen Halbbildern wiedergegeben, die in dem Sinne zueinander komplementär sind, dass sie alle die gleiche Szene wiedergeben und jeweils anderen Blickrichtungen bzw. Kamerapositionen entsprechen, so dass sie sich paarweise zu einem Stereobild dieser Szene mit unterschiedlichen Parallaxenverschiebungen ergänzen. Aufgrund der geschilderten geometrischen Eigenschaften des Bildschirms 11 führt eine solche Ansteuerung der Pixelmatrix 12 dazu, dass sich in der nominalen Betrachtungsentfernung Lₙ vor dem Bildschirm 11 acht nebeneinander liegende Betrachtungszonen mit rautenförmigem Grundriss ergeben, die in Fig. 1 von 1 bis 8 durchnummeriert sind und aus denen jeweils eines der Halbbilder sichtbar ist. Dabei ist aus jeder der Betrachtungszonen jeweils genau das Halbbild sichtbar, das auf der Untermenge wiedergegeben wird, welcher nach der im Zusammenhang mit Fig. 2 eingeführten Nummerierung die gleiche Nummer zugeordnet ist wie der jeweiligen Betrachtungszone. Ein seitlicher Versatz der unmittelbar benachbarten Betrachtungszonen entspricht ungefähr einem Augenabstand eines durchschnittlichen Augenpaars also etwa 65 mm. Jeder Betrachter, der so vor dem Bildschirm platziert ist, dass sich seine Augen innerhalb eines durch die Betrachtungszonen aufgespannten Bereichs und dort in zwei verschiedenen Betrachtungszonen befinden, kann die Szene dadurch in einer dreidimensional erscheinenden Weise wahrnehmen. Der Raum, aus dem die Szene bei dieser Art der Ansteuerung mit befriedigender Bildqualität autostereoskopisch wahrnehmbar ist, ist allerdings sehr begrenzt und auf eine insbesondere bezüglich des Abstandes zum Bildschirm 11 sehr enge Umgebung des von den acht Betrachtungszonen aufgespannten Bereichs beschränkt.

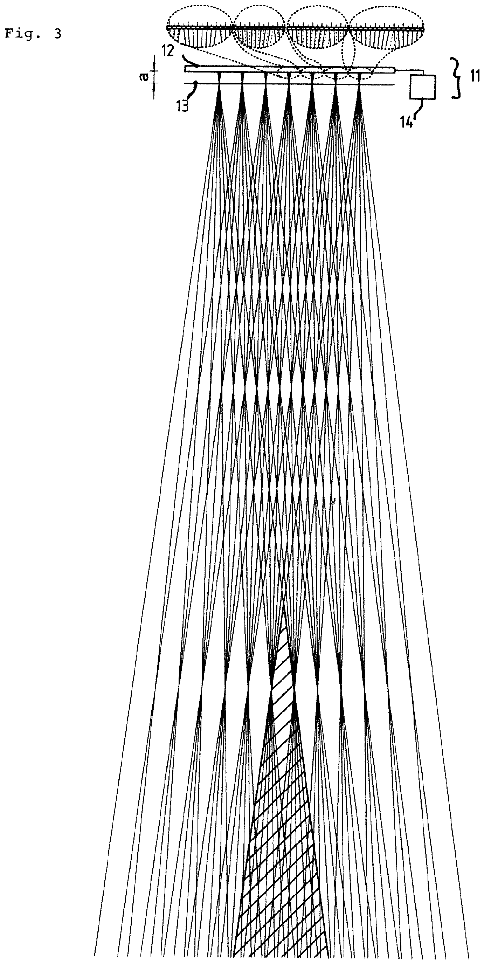

Eine völlig andere Art der Bildwidergabe ist unter dem Namen "Integral Imaging" oder "eindimensionales Integral Imaging" bekannt. Dafür wird ein ähnlich aufgebauter Bildschirm mit Pixelmatrix und optischem Raster verwendet, dessen optisches Raster jedoch eine Periodenlänge hat, die für ein ganzzahliges n genau einem n-fachen eines seitlichen Versatzes benachbarter Pixelspalten entspricht. Auf der Pixelmatrix dieses Bildschirms werden nun in ähnlicher Weise n Untermengen von Pixeln gebildet, wobei auf jeder dieser Untermengen eine von n verschiedenen Parallelprojektionen der wiederzugebenden 3D-Szene wiedergegeben wird, wobei sich diese Parallelprojektionen durch leicht unterschiedliche Projektionsrichtungen voneinander unterscheiden. Die spezielle Geometrie von für Integral Imaging vorgesehenen Bildschirmen führt nun dazu, dass das von einer einzelnen Untermenge der Untermengen von Pixeln ausgehende Licht jeweils in parallelen Strahlen bzw. Fächern durch das optische Raster fällt in einer Weise, die in Fig. 3 beispielhaft für n=8 veranschaulicht ist. Dadurch ergibt sich in einem verhältnismäßig großen Beobachtungsraum vor dem Bildschirm, der in Fig. 3 schraffiert ist, ein Lichtfeld, das sehr ähnlich dem Lichtfeld ist, dass die wiedergegebene 3D-Szene in Realität verursachen würde. Ein Betrachter, der so platziert ist, dass seine Augen innerhalb dieses insbesondere in der Tiefe sehr ausgedehnten Beobachtungsraums liegen, kann die 3D-Szene dadurch dreidimensional wahrnehmen, wobei er eine Mischung der verschiedenen Parallelprojektionen sieht, indem von verschiedenen Bereichen des Bildschirms Beiträge unterschiedlicher Parallelprojektionen in seine Augen fallen. Dabei sieht der Betrachter die 3D-Szene jeweils aus einer Perspektive, die seiner aktuellen Position innerhalb des Beobachtungsraums entspricht und die sich bei einer Bewegung des Betrachters mit dieser Position ändert.

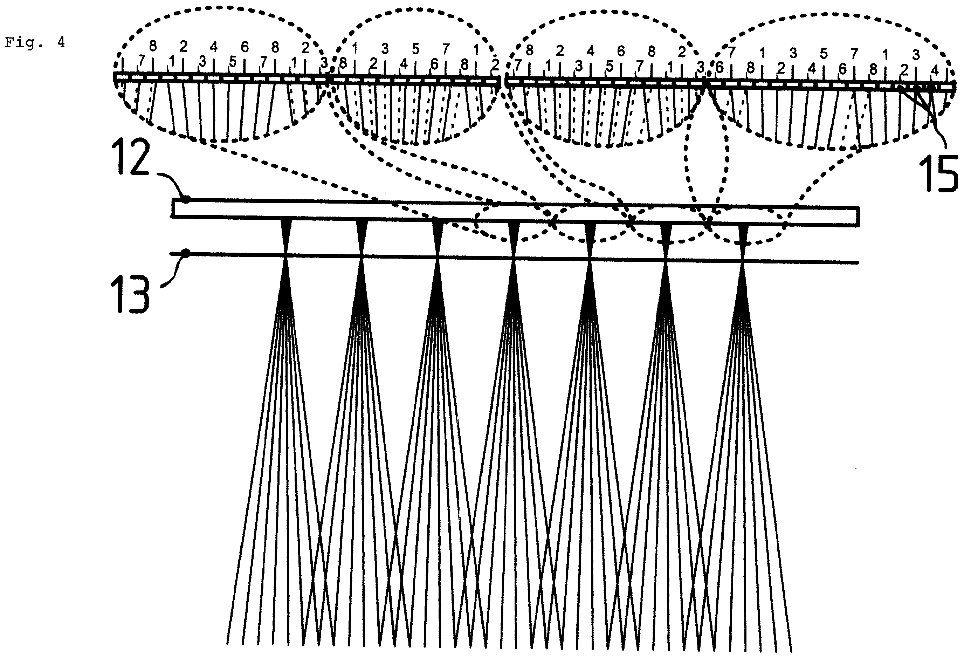

Die in Fig. 4 gezeigte Vergrößerung eines Ausschnitts aus Fig. 3 veranschaulicht, warum diese Art der Bildwiedergabe mit dem vorliegenden Bildschirm 11 nicht ohne weiteres möglich ist. Dort sind für einige ausgewählte Bereiche der Pixelmatrix 12 Ausschnitte einer Pixelzeile noch einmal vergrößert gezeigt. Die Pixel 15 sind dort jeweils mit einer der Ziffern 1 bis 8 gekennzeichnet, die der Nummerierung aus Fig. 2 und mithin der Aufteilung in Untermengen bei einer Ansteuerung gemäß der in Fig. 1 gezeigten Art entspricht. Durchgezogen sind in diesen Vergrößerungen die entsprechenden Abschnitte der tatsächlichen Strahlengänge aus Fig. 1 gezeigt. Die Strahlen des in Fig. 3 gezeigten Strahlenfeldes dagegen sind dort durch gestrichelte Linien angedeutet. Dabei ist zu erkennen, dass diese Strahlen - die wie alle in den Figuren wiedergegebenen Strahlen jeweils eine Mittellinie der entsprechenden endlich ausgedehnten Lichtbündel wiedergeben sollen - nicht zentral von den Pixeln 15 ausgehen, sondern von Punkten, die gegenüber Mittelpunkten der Pixel 15 um verschiedene kleine Beträge seitlich verschoben sind. Das ist eine Folge des oben beschriebenen Zusammenhangs D=[8×Lₙ/(Lₙ+a)]×d und der Grund dafür, dass die im vorherigen Absatz beschriebene Art der Bildwiedergabe nicht ohne weiteres auf den vorliegenden Bildschirm 11 übertragbar ist.

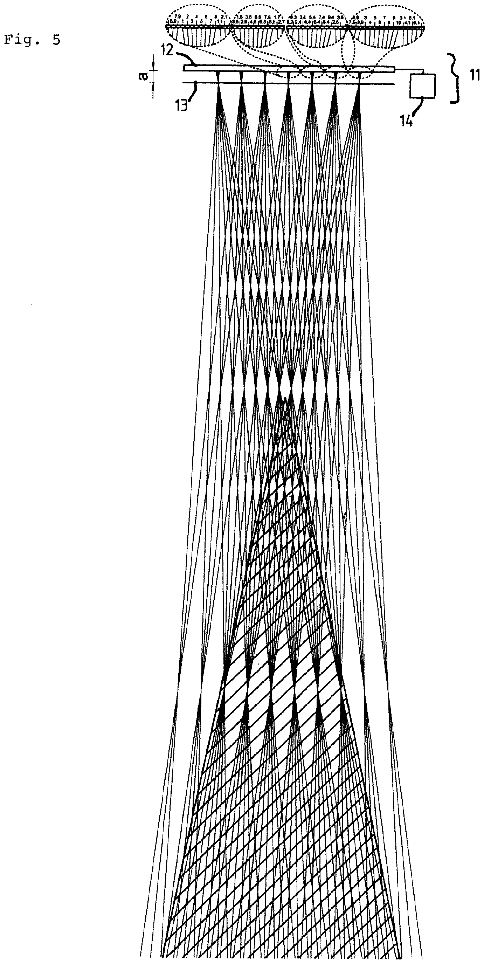

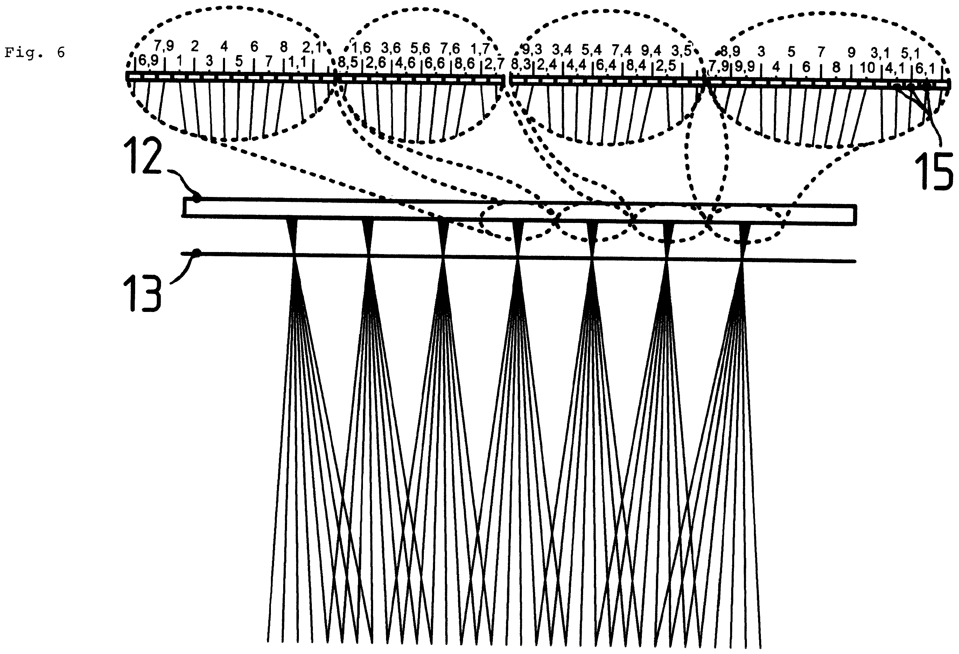

Mit dem hier beschriebenen Bildschirm 11 wird nun ein anderes Verfahren zum Wiedergeben von Bildinformationen durchgeführt, dass zu einer dem Integral Imaging vergleichbaren Wirkung führt und das zunächst mit Bezug auf Fig. 5 und Fig. 6 erläutert wird. Dazu wird zunächst eine spezielle Zuordnung vorgenommen, indem jeder der genannten Spalten jeweils ein Winkelwert und jeweils ein Ortskoordinatenwert zugeordnet wird, wobei der Winkelwert definiert ist als Maß für einen Winkel zwischen einer horizontalen Referenzrichtung und der horizontalen Ausbreitungsrichtung oder einer der horizontalen Ausbreitungsrichtungen, die dem von den Pixeln 15 der jeweiligen Spalte ausgehenden Licht durch das optische Raster 13 vorgegeben wird oder werden, und wobei der Ortskoordinatenwert eine Lage der jeweiligen Spalte oder der streifenförmigen Struktur des optischen Rasters 13, durch die das von den Pixeln 15 der jeweiligen Spalte ausgehende Licht fällt, in lateraler Richtung angibt. Der Ortskoordinatenwert kann dazu als Koordinate eines Schnittpunktes der jeweiligen Spalte oder streifenförmigen Struktur mit einer in Zeilenrichtung der Pixelmatrix 12 orientierten Koordinatenachse bezüglich dieser Koordinatenachse definiert werden. Die Winkelwerte nehmen dabei weit mehr als 8 verschiedene Werte an. Zur Veranschaulichung sind in Fig. 6 die in den dort vergrößert dargestellten Ausschnitten erkennbaren Pixel 15 jeweils mit dem Winkelwert gekennzeichnet, der der Spalte zugeordnet ist, zu der das jeweilige Pixel 15 gehört. Im vorliegenden Fall sind die Winkelwerte dabei so skaliert, dass acht unmittelbar benachbarten und mittig durch die Pixelmatrix 12 verlaufenden Spalten von Pixeln 15 die Winkelwerte 1, 2, 3, 4, 5, 6, 7 und 8 zugeordnet sind. In anderen Bereichen der Pixelmatrix 12 nehmen die Winkelwerte dagegen auch Zwischenwerte an.

Die Steuereinheit 14 ist zunächst dazu eingerichtet, die geschilderte Zuordnung von Winkelwerten und Ortskoordinaten zu berechnen oder, falls diese Zuordnung schon an irgendeiner Stelle abgespeichert ist, diese Zuordnung auszuwerten.
Aufbauend darauf wird durch eine entsprechende Programmierung der Steuereinheit 14 für jede der Spalten durch eine Bildsynthese jeweils ein Auszug eines Bildes berechnet, wobei dieses Bild jeweils eine Parallelprojektion einer wiederzugebenden 3D-Szene ist mit einer Projektionsrichtung, die durch den Winkel definiert ist, der dem der jeweiligen Spalte zugeordneten Winkelwert entspricht, und wobei der Auszug jeweils durch einen Streifen dieses Bildes definiert ist, der in diesem Bild eine seitliche Lage hat, die dem der jeweiligen Spalte zugeordneten Ortskoordinatenwert entspricht. Dazu kann ein herkömmliches Render-Verfahren verwendet werden, wobei sich gegenüber herkömmlichen Anwendungen solcher Render-Verfahren oder Bildsynthese Verfahren kein rechnerischer Mehraufwand ergibt, weil die verhältnismäßig große Zahl von Parallelprojektionen nicht vollständig berechnet werden, sondern nur die genannten streifenförmigen Auszüge, also jeweils verhältnismäßig kleine Teile dieser Parallelprojektionen, berechnet werden. Ausgangspunkt können jeweils Daten sein, die die 3D-Szene in herkömmlicher Weise definieren und die das verwendete Render-Verfahren bzw. die angewandte Bildsynthese in an sich bekannter Weise verarbeitet, um die benötigten Parallelprojektionen bzw. durch Parallelprojektionen definierten Bilder zu erhalten, wenn auch nur jeweils auszugsweise.
Schließlich werden die Pixel 15 der Pixelmatrix 12 durch die dazu eingerichtete Steuereinheit 14 so angesteuert, dass in jede der Spalten der für diese Spalte berechnete Auszug eingeschrieben wird. Das Berechnen der Auszüge impliziert dabei das Ermitteln von Helligkeitswerten von Bildpunkten der Auszüge, wobei die Auszüge in die Spalten der Pixelmatrix 12 eingeschrieben werden, indem die die jeweilige Spalte bildenden Pixel 15 mit den für die Bildpunkte des jeweiligen Auszugs ermittelten und abhängig von der jeweiligen Grundfarbe definierten Helligkeitswerten angesteuert werden.
Durch diese Ansteuerung sehen die Augen eines Betrachters, der sich mit seinen Augen innerhalb des in Fig. 5 schraffiert dargestellten Beobachtungsraums aufhält, jeweils Beiträge einer großen Zahl der oben genannten Auszüge und dementsprechend - genau wie beim zuvor beschriebenen Integral Imaging-eine Mischung aus verschiedenen Parallelprojektionen, wobei diese Mischung jeweils genau einer realistischen Perspektive entspricht, wobei sich die für die zwei Augen sichtbaren Perspektiven durch eine dem Augenabstand entsprechende Parallaxenverschiebung voneinander unterscheiden. So vermittelt der Bildschirm dem Betrachter an jedem beliebigen Ort innerhalb des Beobachtungsraums in einer dem Integral Imaging vergleichbaren Weise einen dreidimensionalen Eindruck der wiedergegebenen 3D-Szene. Dabei erstreckt sich der Beobachtungsraum bis zu beliebig großen Betrachtungsentfernungen und wird nach hinten hin deutlich breiter als der durch die Betrachtungszonen aus Fig. 1 aufgespannte Bereich, in dem sich der Betrachter bei einer herkömmlichen Ansteuerung aufhalten muss, um ein dreidimensional wirkendes Bild mit befriedigender Qualität sehen zu können.

Da die Winkelwerte, wie in Fig. 6 veranschaulicht, so genau und feinstufig berechnet und den Spalten dementsprechend so zugeordnet werden, dass den verschiedenen Spalten eine Anzahl von weit mehr als acht verschiedenen Winkelwerten zugeordnet werden, werden auch die für die Spalten berechneten Auszüge aus einer entsprechend großen Anzahl von weit mehr als acht verschiedenen Parallelprojektionen mit einer entsprechenden Anzahl von weit mehr als acht verschiedenen Projektionsrichtungen berechnet.

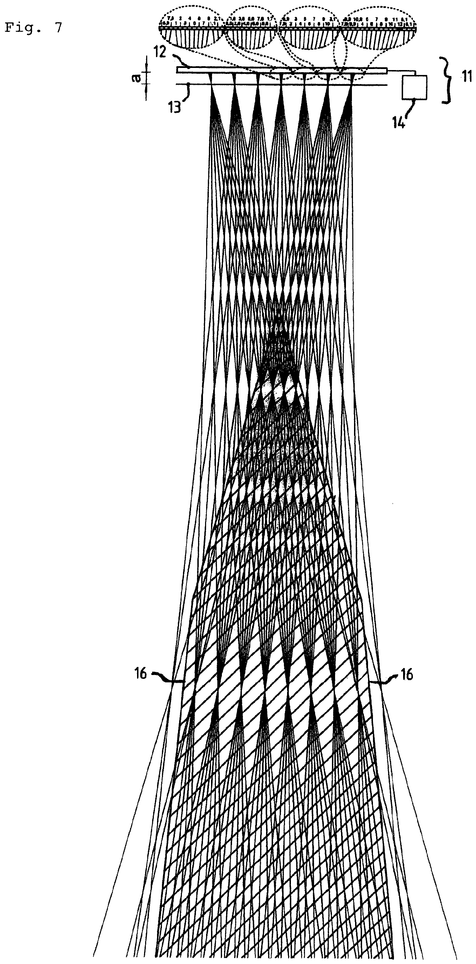

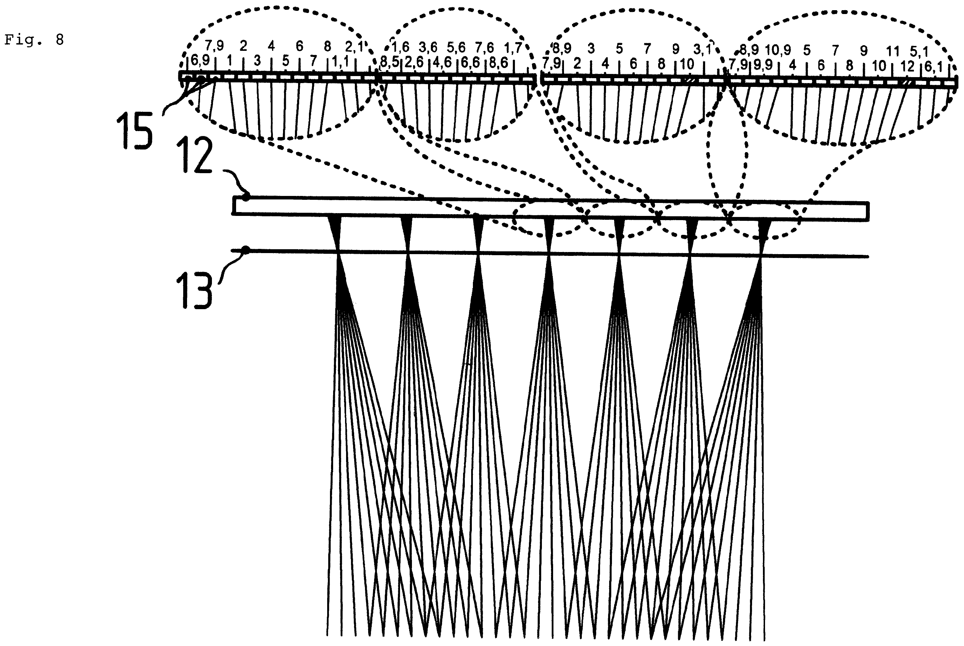

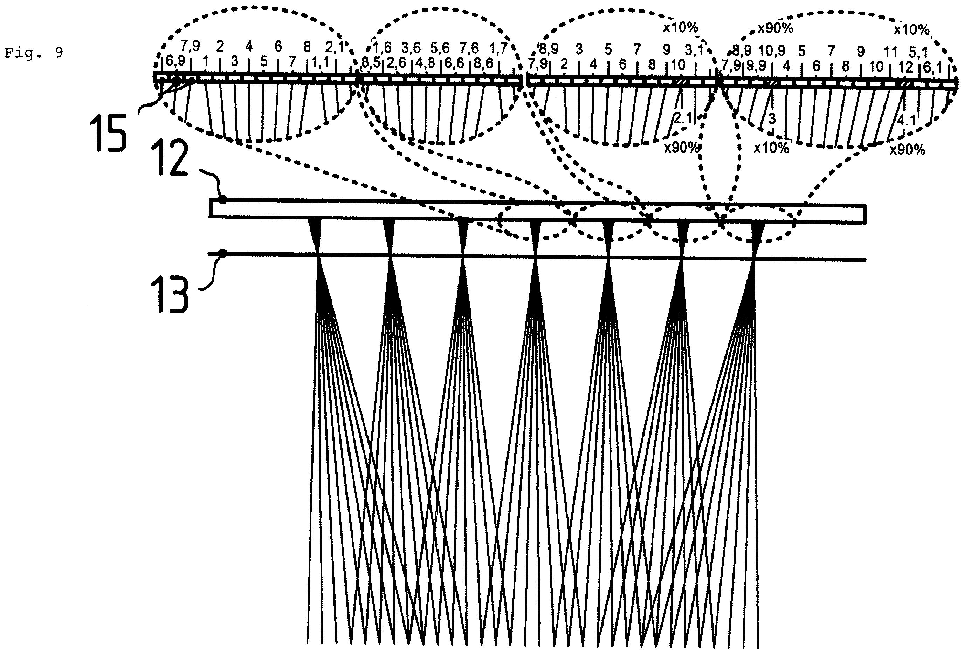

Die Projektionsrichtungen der Parallelprojektionen, deren Auszüge für die verschiedenen Spalten berechnet werden, werden dabei so gewählt, dass sie mit einer für alle diese Parallelprojektionen gemeinsamen Referenzprojektionsrichtung jeweils einen Winkel einschließen, der genauso groß ist wie der Winkel, der dem der jeweiligen Spalte zugeordneten Winkelwert entspricht. Bei Abwandlungen können die Projektionsrichtungen unter Umständen auch so gewählt werden, dass sie mit der Referenzprojektionsrichtung jeweils einen Winkel einschließen, der sich durch Multiplikation des Winkel, der dem der jeweiligen Spalte zugeordneten Winkelwert entspricht, mit einem für alle diese Parallelprojektionen gemeinsamen von eins abweichenden Proportionalitätsfaktor ergibt. Als Referenzprojektionsrichtung wird dabei eine Richtung gewählt werden, die einer ausgewählten Blickrichtung auf die 3D-Szene entspricht, wobei die beschriebene Wiedergabe dann dazu führt, dass der Betrachter die 3D-Szene dann genau dieser Blickrichtung entsprechend auf dem Bildschirm 11 sieht, wenn er aus der oben genannten horizontalen Referenzrichtung auf den Bildschirm 11 schaut. Die horizontale Referenzrichtung ist dabei die Richtung, die dem Winkelwert null entspricht. Dass das optische Raster 13 eine Vielzahl der streifenförmigen Strukturen - also im vorliegenden Fall eine Vielzahl nebeneinander liegender Zylinderlinsen oder in einer der genannten Abwandlungen eine Vielzahl von nebeneinander liegenden Schlitzen - aufweist, durch die das von en Pixeln 15 ausgehende Licht fallen kann, gibt das optische Raster dem von den Pixeln 15 jeder der Spalten ausgehenden Licht jeweils nicht nur eine, sondern eine endliche Zahl verschiedener Ausbreitungsebenen mit dementsprechend verschiedenen horizontalen Ausbreitungsrichtungen vor. Das hat zur Folge, dass die beschriebenen Maßnahmen zur Ansteuerung der Pixelmatrix noch einen gewissen Spielraum bei der Bestimmung der den Spalten zuzuordnenden Winkelwerte zulassen. Dieser Spielraum kann ausgenutzt werden, um den Beobachtungsraum innerhalb gewisser Grenzen zu verschieben und insbesondere auch näher an den Bildschirm 11 heranzuholen, was in Fig. 7 und Fig. 8 gezeigt wird.
Zum Bestimmen des der jeweiligen Spalte zugeordneten Winkelwerts wird dabei aus den verschiedenen möglichen horizontalen Ausbreitungsrichtungen die durch die verschiedenen Ausbreitungsebenen definiert sind, jeweils eine Ausbreitungsrichtung ausgewählt, die dadurch definiert ist, dass das von den Pixeln 15 dieser Spalte ausgehende und mit dieser Ausbreitungsrichtung durch das optische Raster 13 fallende Licht in den jeweils vorgegebenen zusammenhängenden Beobachtungsraum vor dem Bildschirm fällt. Wie ein Vergleich der Figuren 5 und 7 zeigt, kann der Beobachtungsraum dabei unterschiedlich gewählt werden. Dabei liegt der in den Figuren 5 und 7 jeweils schraffiert dargestellte Beobachtungsraum in den hier gezeigten Fällen jeweils innerhalb eines Bereichs, der ausgeleuchtet wird durch das Licht, das von der schon zuvor genannten Gruppe von acht unmittelbar benachbarten und mittig durch die Pixelmatrix 12 verlaufenden Spalten von Pixeln 15 ausgeht und durch eine der streifenförmigen Strukturen des optischen Rasters 13 fällt, die genau mittig vor dieser Gruppe von Spalten liegt. In entsprechender Weise wie in Fig. 6 sind in Fig. 8, die einen vergrößerten Ausschnitt der Fig. 7 zeigt, die bei einer Ansteuerung gemäß Fig. 7 zugeordneten Winkelwerte für einige ausgewählte Spalten von Pixeln 15 angegeben. Den beispielhaft gezeigten Pixeln 15 bzw. Spalten von Pixeln 15 werden demzufolge bei der gewählten Skalierung Winkelwerte zwischen 1 und 12 zugeordnet.
Die Winkelwerte werden den Spalten dabei jeweils so zugeordnet, dass die Spalten auf Gruppen von jeweils acht oder auch neun oder zumindest sieben unmittelbar benachbarten Spalten verteilt sind, innerhalb derer die den Spalten der jeweiligen Gruppe zugeordneten Winkelwerte sich von Spalte zu Spalte um eine für alle Gruppen gleiche Winkeldifferenz unterscheiden, die bei der hier gewählten Skalierung genau eins beträgt. Die Winkelwerte, die den Spalten jeder dieser Gruppen zugeordnet sind, überspannen dabei jeweils ein Intervall, das zumindest für die meisten dieser Gruppen jeweils achtmal so groß ist wie die genannte Winkeldifferenz, mindestens jedoch siebenmal so groß.
Ein Vergleich der Figuren 5 und 7 zeigt, wie der Beobachtungsraum durch Ändern der Aufteilung der Spalten auf die genannten Gruppen entweder in der in Fig. 7 gezeigten Weise - auf Kosten einer Breite des Beobachtungsraums in größerer Entfernung vom Bildschirm - näher an den Bildschirm 11 herangezogen werden oder in einer in Fig. 5 gezeigten Weise - um den Preis einer größeren Mindestentfernung - in größerer Entfernung vom Bildschirm 11 verbreitert werden kann.
Eine Abwandlung der anhand der Figuren 7 und 8 beschriebenen Ansteuerung der Pixelmatrix 12 ist in einer der Fig. 8 entsprechenden Darstellungsweise in Fig. 9 veranschaulicht. Bei dieser abgewandelten Ansteuerung werden zumindest einige der Spalten, die an einem Rand einer der genannten Gruppen von Spalten liegen, zusätzlich auch der sich an diesem Rand der Gruppe anschließenden benachbarten Gruppe von Spalten zugeordnet. Diesen Spalten, von denen in den noch einmal vergrößerten Ausschnitten aus Fig. 9 drei zu sehen sind und deren dort erkennbare Pixel 15 in Fig. 9 schraffiert dargestellt sind, werden dementsprechend zwei Winkelwerte zugeordnet, die durch zwei der horizontalen Ausbreitungsrichtungen definiert werden. Diese zwei Winkelwerte sind für die drei in Fig. 9 erkennbaren Fälle in der dort gewählten Skalierung in einem Fall 2,1 und 10, in einem anderen Fall 3 und 10,9 und in einem dritten Fall 4,1 und 12. Diese doppelte Zuordnung wird dabei genau bei den Spalten vorgenommen, deren Position bei dem gewählten bzw. angestrebten Beobachtungsraum gerade so liegt, dass das von dort ausgehende Licht durch zwei benachbarte Strukturen des optischen Rasters 13 das optische Raster 13 jeweils genau oder fast genau längs einer von zwei seitlichen Begrenzungen 16 des Beobachtungsraums verlässt. Je nachdem, mit welcher der zwei in Frage kommenden Ausbreitungsrichtungen das Licht weiter in den Betrachtungsraum hineinfällt, kann einer oder der anderen dieser Ausbreitungsrichtungen, wie in Fig. 9 angedeutet, eine größere oder eine kleinere Gewichtung, also ein größerer oder kleinerer Wichtungsfaktor, zugeordnet werden. Für jede dieser ausgewählten Spalten werden nun jeweils zwei Auszüge unter Zugrundelegung jeweils eines der beiden Winkelwerte, die der jeweiligen Spalte zugeordnet sind, berechnet, wobei die Pixel 15 dieser Spalten jeweils mit einem gemittelten Helligkeitswert angesteuert werden. Dabei wird dieser gemittelte Helligkeitswert durch Mitteln von Helligkeitswerten ermittelt, die durch diese beiden Auszüge definiert werden, wobei diese Helligkeitswerte mit den genannten Gewichtungen oder Wichtungsfaktoren, die sich zu 100% ergänzen, gewichtet werden. Durch diese Maßnahme kann der Beobachtungsraum praktisch stufenlos verschoben und bei Bedarf näher an den Bildschirm 11 herangezogen werden.

Die genannten gemittelten Helligkeitswerte, mit denen die Pixel 15 der Spalten angesteuert werden, denen zwei Winkelwerte zugeordnet und für die zwei Auszüge berechnet werden, werden also in diesem Fall ermittelt als Summe aus einem mit einem ersten Wichtungsfaktor gewichteten ersten Helligkeitswert und einem mit einem zweiten Wichtungsfaktor gewichteten zweiten Helligkeitswert, wobei der erste Helligkeitswert jener Helligkeitswert ist, der durch einen ersten der zwei Auszüge für das jeweilige Pixel 15 definiert ist, während der zweite Helligkeitswert der ist, der durch den zweiten dieser zwei Auszüge für dasselbe Pixel 15 definiert ist. Der erste Wichtungsfaktor und der zweite Wichtungsfaktor werden dabei durch eine entsprechende Programmierung der Steuereinheit 14 für jede der betroffenen Spalten von Pixeln 15 jeweils abhängig davon definiert, wie nah an einer seitlichen Begrenzung 16 des in Fig. 7 schraffiert dargestellten Beobachtungsraums das von den Pixeln 15 der jeweiligen Spalte ausgehende und mit der durch den jeweiligen Winkelwert definierten Ausbreitungsrichtung durch das optische Raster 13 fallende Licht in den Beobachtungsraum fällt. Dadurch ergibt sich eine besonders störungsarme Bildwiedergabe. Der jeweils für eine der Spalten definierte erste Wichtungsfaktor ist dabei umso kleiner, je näher das von den Pixeln 15 dieser Spalte ausgehende und mit der durch den ersten Winkelwert definierten Ausbreitungsrichtung durch das optische Raster 13 fallende Licht an der nächstliegenden seitlichen Begrenzung 16 des Beobachtungsraums in den Beobachtungsraum fällt, und umso größer, je weiter von der nächstliegenden seitlichen Begrenzung 16 des Beobachtungsraums entfernt das von den Pixeln 15 dieser Spalte ausgehende und mit der durch den ersten Winkelwert definierten Ausbreitungsrichtung durch das optische Raster 13 fallende Licht in den Beobachtungsraum fällt oder - anders ausgedrückt - je weiter das entsprechende Lichtbündel also innerhalb des Beobachtungsraums liegt. Der für die jeweilige Spalte definierte zweite Wichtungsfaktor wird dementsprechend umso größer definiert, je weiter von der nächstliegenden seitlichen Begrenzung 16 des Beobachtungsraums entfernt das von den Pixeln 15 dieser Spalte ausgehende und mit der durch den zweiten Winkelwert definierten Ausbreitungsrichtung durch das optische Raster 13 fallende Licht in den Beobachtungsraum fällt - je weiter das entsprechende Lichtbündel mit dieser Ausbreitungsrichtung also innerhalb des Beobachtungsraums liegt. Andersherum wird der für die jeweilige Spalte definierte zweite Wichtungsfaktor umso kleiner definiert, je näher das von den Pixeln 15 dieser Spalte ausgehende und mit der durch den zweiten Winkelwert definierten Ausbreitungsrichtung durch das optische Raster 13 fallende Licht an der seitlichen Begrenzung 16 des Beobachtungsraums in den Beobachtungsraum fällt. Der zweite Wichtungsfaktor ist also umso größer, je kleiner der erste Wichtungsfaktor ist, und vice versa.

## Patentansprüche

1. Verfahren zum Wiedergeben von Bildinformationen auf einem autostereoskopischen Bildschirm (11), der eine Pixelmatrix (12) mit einer Vielzahl von Pixeln (15) sowie ein vor der Pixelmatrix (12) angeordnetes optisches Raster (13) aufweist, wobei die Pixel (15) der Pixelmatrix (12) so angeordnet sind, dass sie eine Vielzahl von äquidistant nebeneinander angeordneten Spalten mit einer vertikalen oder gegenüber einer Vertikalen geneigten Spaltenrichtung bilden, und wobei das optische Raster (13) eine Schar von parallel zu den Spalten orientierten und äquidistant nebeneinander angeordneten streifenförmigen Strukturen aufweist und von den Pixeln (15) ausgehendem Licht jeweils mindestens eine definierte Ausbreitungsebene vorgibt, die aus einer definierten horizontalen Ausbreitungsrichtung und der Spaltenrichtung aufgespannt wird, wobei eine durch einen seitlichen Versatz benachbarter streifenförmiger Strukturen definierte Periodenlänge (D) des optischen Rasters (13) um einen Faktor n×Lₙ/(Lₙ+a) größer ist als ein seitlicher Versatz (d) der unmittelbar benachbarten Spalten, wobei a einen effektiven Abstand zwischen der Pixelmatrix (12) und dem optischen Raster (13), Lₙ eine nominale Betrachtungsentfernung des autostereoskopischen Bildschirms (11) und n eine ganzzahlige Zahl größer als zwei bezeichnet,
**dadurch gekennzeichnet,**
**dass** das Verfahren folgende Schritte umfasst:
- Zuordnen jeweils eines Winkelwertes und jeweils eines Ortskoordinatenwertes zu jeder der genannten Spalten, wobei der Winkelwert definiert ist als Maß für einen Winkel zwischen einer horizontalen Referenzrichtung und der horizontalen Ausbreitungsrichtung oder einer der horizontalen Ausbreitungsrichtungen, die dem von den Pixeln (15) der jeweiligen Spalte ausgehenden Licht durch das optische Raster (13) vorgegeben wird oder werden, und wobei der Ortskoordinatenwert eine Lage der jeweiligen Spalte oder der streifenförmigen Struktur des optischen Rasters (13), durch die das von den Pixeln (15) dieser Spalte ausgehende Licht fällt, in lateraler Richtung angibt,
- für jede der Spalten Berechnen jeweils eines Auszugs eines Bildes durch Bildsynthese, wobei dieses Bild jeweils eine Parallelprojektion einer wiederzugebenden 3D-Szene ist mit einer Projektionsrichtung, die durch den Winkel definiert ist, der dem der jeweiligen Spalte zugeordneten Winkelwert entspricht, und wobei der Auszug jeweils durch einen Streifen dieses Bildes definiert ist, der in diesem Bild eine seitliche Lage hat, die dem der jeweiligen Spalte zugeordneten Ortskoordinatenwert entspricht,
- Ansteuern der Pixel (15) der Pixelmatrix (12) derart, dass in jede der Spalten der für diese Spalte berechnete Auszug eingeschrieben wird.

2. Verfahren nach Anspruch 1, **dadurch gekennzeichnet, dass** das Berechnen der Auszüge das Ermitteln von Helligkeitswerten von Bildpunkten der Auszüge beinhaltet, wobei die Auszüge in die Spalten der Pixelmatrix (12) eingeschrieben werden, indem die die jeweilige Spalte bildenden Pixel (15) mit den für die Bildpunkte des jeweiligen Auszugs ermittelten Helligkeitswerten angesteuert werden.

3. Verfahren nach einem der Ansprüche 1 oder 2, **dadurch gekennzeichnet, dass** den verschiedenen Spalten eine Anzahl von mehr als n verschiedenen Winkelwerten zugeordnet werden, so dass die für die Spalten berechneten Auszüge aus einer entsprechenden Anzahl von mehr als n verschiedenen Parallelprojektionen mit einer entsprechenden Anzahl von mehr als n verschiedenen Projektionsrichtungen berechnet werden.

4. Verfahren nach einem der Ansprüche 1 bis 3, **dadurch gekennzeichnet, dass** die Projektionsrichtungen der Parallelprojektionen, deren Auszüge für die verschiedenen Spalten berechnet werden, mit einer für alle diese Parallelprojektionen gemeinsamen Referenzprojektionsrichtung jeweils einen Winkel einschließen, der genauso groß ist wie der Winkel, der dem der jeweiligen Spalte zugeordneten Winkelwert entspricht, oder der sich durch Multiplikation des letztgenannten Winkels mit einem für alle diese Parallelprojektionen gemeinsamen Proportionalitätsfaktor ergibt.

5. Verfahren nach einem der Ansprüche 1 bis 4, **dadurch gekennzeichnet, dass** das optische Raster (13) dem von den Pixeln (15) jeder Spalte oder von den Pixeln (15) einiger der Spalten ausgehenden Licht jeweils eine endliche Zahl verschiedener Ausbreitungsebenen mit dementsprechend verschiedenen horizontalen Ausbreitungsrichtungen vorgibt, die sich dadurch ergeben, dass das Licht durch verschiedene der streifenförmigen Strukturen des optischen Rasters (13) fällt, wobei zum Bestimmen des der jeweiligen Spalte zugeordneten Winkelwerts aus diesen Ausbreitungsrichtungen eine Ausbreitungsrichtung ausgewählt wird, die dadurch definiert ist, dass das von den Pixeln (15) dieser Spalte ausgehende und mit dieser Ausbreitungsrichtung durch das optische Raster (13) fallende Licht in einen vorgegebenen zusammenhängenden Beobachtungsraum vor dem Bildschirm (11) fällt.

6. Verfahren nach Anspruch 5, **dadurch gekennzeichnet, dass** die Winkelwerte den Spalten so zugeordnet werden, dass die Spalten auf Gruppen von jeweils n oder n+1 oder n-1 unmittelbar benachbarten Spalten verteilt sind, innerhalb derer die den Spalten der jeweiligen Gruppe zugeordneten Winkelwerte sich von Spalte zu Spalte um eine für alle Gruppen gleiche Winkeldifferenz unterscheiden, wobei die Winkelwerte, die den Spalten jeder dieser Gruppen zugeordnet sind, jeweils ein Intervall überspannen, das mindestens (n-1)-mal so groß ist wie die genannte Winkeldifferenz.

7. Verfahren nach Anspruch 6, **dadurch gekennzeichnet, dass** zumindest einige der Spalten, die an einem Rand einer der genannten Gruppen von Spalten liegen, zusätzlich der sich an diesem Rand der Gruppe anschließenden benachbarten Gruppe von Spalten zugeordnet werden und dass diesen Spalten dementsprechend zwei Winkelwerte zugeordnet werden, die durch zwei der horizontalen Ausbreitungsrichtungen definiert werden, wobei für diese Spalten dementsprechend jeweils zwei Auszüge unter Zugrundelegung jeweils eines dieser beiden Winkelwerte berechnet werden und wobei die Pixel (15) dieser Spalten jeweils mit einem gemittelten Helligkeitswert angesteuert werden, der sich durch Mitteln von Helligkeitswerten ergibt, die durch diese beiden Auszüge definiert werden.

8. Autostereoskopischer Bildschirm (11), der eine Pixelmatrix (12) mit einer Vielzahl von Pixeln (15) ein vor der Pixelmatrix (12) angeordnetes optisches Raster (13) und eine Steuereinheit (14) zum Ansteuern der Pixelmatrix (12) aufweist,
wobei die Pixel (15) der Pixelmatrix (12) so angeordnet sind, dass sie eine Vielzahl von äquidistant nebeneinander angeordneten Spalten mit einer vertikalen oder gegenüber einer Vertikalen geneigten Spaltenrichtung bilden,
wobei das optische Raster (13) eine Schar von parallel zu den Spalten orientierten und äquidistant nebeneinander angeordneten streifenförmigen Strukturen aufweist und von den Pixeln (15) ausgehendem Licht jeweils mindestens eine definierte Ausbreitungsebene vorgibt, die aus einer definierten horizontalen Ausbreitungsrichtung und der Spaltenrichtung aufgespannt wird, wobei eine durch einen seitlichen Versatz benachbarter streifenförmiger Strukturen definierte Periodenlänge (D) des optischen Rasters (13) um einen Faktor n×Lₙ/(Lₙ+a) größer ist als ein seitlicher Versatz (d) der unmittelbar benachbarten Spalten, wobei a einen effektiven Abstand zwischen der Pixelmatrix (12) und dem optischen Raster (13), Lₙ eine nominale Betrachtungsentfernung des autostereoskopischen Bildschirms (11) und n eine ganzzahlige Zahl größer als zwei bezeichnet,
und wobei die Steuereinheit (14) eingerichtet ist zur Durchführung folgender Schritte:
- Berechnen oder Auswerten einer Zuordnung, die jeder der genannten Spalten jeweils einen Winkelwert und jeweils einen Ortskoordinatenwert zuordnet, wobei der Winkelwert definiert ist als Maß für einen Winkel zwischen einer horizontalen Referenzrichtung und der horizontalen Ausbreitungsrichtung oder einer der horizontalen Ausbreitungsrichtungen, die dem von den Pixeln (15) der jeweiligen Spalte ausgehenden Licht durch das optische Raster (13) vorgegeben wird oder werden, und wobei der Ortskoordinatenwert eine Lage der jeweiligen Spalte oder der streifenförmigen Struktur des optischen Rasters (13), durch die das von den Pixeln (15) dieser Spalte ausgehende Licht fällt, in lateraler Richtung angibt,
- für jede der Spalten Berechnen jeweils eines Auszugs eines Bildes durch Bildsynthese, wobei dieses Bild jeweils eine Parallelprojektion einer wiederzugebenden 3D-Szene ist mit einer Projektionsrichtung, die durch den Winkel definiert ist, der dem der jeweiligen Spalte zugeordneten Winkelwert entspricht, und wobei der Auszug jeweils durch einen Streifen dieses Bildes definiert ist, der in diesem Bild eine seitliche Lage hat, die dem der jeweiligen Spalte zugeordneten Ortskoordinatenwert entspricht,
- Ansteuern der Pixel (15) der Pixelmatrix (12) derart, dass in jede der Spalten der für diese Spalte berechnete Auszug eingeschrieben wird.

9. Autostereoskopischer Bildschirm (11) nach Anspruch 8, **dadurch gekennzeichnet, dass** die Steuereinheit (14) eingerichtet ist, beim Berechnen der Auszüge Helligkeitswerte von Bildpunkten der Auszüge zu ermitteln und die Auszüge in die Spalten der Pixelmatrix (12) einzuschreiben durch Ansteuern der die jeweilige Spalte bildenden Pixel (15) mit den für die Bildpunkte des jeweiligen Auszugs ermittelten Helligkeitswerten.

10. Autostereoskopischer Bildschirm (11) nach einem der Ansprüche 8 oder 9, **dadurch gekennzeichnet, dass** die genannte Zuordnung den verschiedenen Spalten eine Anzahl von mehr als n verschiedenen Winkelwerten zuordnet, so dass die Steuereinheit (14) eingerichtet ist, die Auszüge für die verschiedenen Spalten der Pixelmatrix (12) aus einer entsprechenden Anzahl von mehr als n verschiedenen Parallelprojektiönen mit einer entsprechenden Anzahl von mehr als n verschiedenen Projektionsrichtungen zu berechnen.

11. Autostereoskopischer Bildschirm (11) nach einem der Ansprüche 8 bis 10, **dadurch gekennzeichnet, dass** die Steuereinheit (14) eingerichtet ist, die Auszüge für die verschiedenen Spalten so zu berechnen, dass die Projektionsrichtungen der Parallelprojektionen, um deren Auszüge es sich handelt, mit einer für alle diese Parallelprojektionen gemeinsamen Referenzprojektionsrichtung jeweils einen Winkel einschließen, der genauso groß ist wie der Winkel, der dem der jeweiligen Spalte zugeordneten Winkelwert entspricht, oder der sich durch Multiplikation des letztgenannten Winkels mit einem für alle diese Parallelprojektionen gemeinsamen Proportionalitätsfaktor ergibt.

12. Autostereoskopischer Bildschirm (11) nach einem der Ansprüche 8 bis 11, **dadurch gekennzeichnet, dass** das optische Raster (13) dem von den Pixeln (15) jeder Spalte oder von den Pixeln (15) einiger der Spalten ausgehenden Licht jeweils eine endliche Zahl verschiedener Ausbreitungsebenen mit dementsprechend verschiedenen horizontalen Ausbreitungsrichtungen vorgibt, die sich dadurch ergeben, dass das Licht durch verschiedene der streifenförmigen Strukturen des optischen Rasters (13) fällt, wobei der der jeweiligen Spalte zugeordnete Winkelwert durch eine ausgewählte Ausbreitungsrichtung aus diesen Ausbreitungsrichtungen definiert ist, wobei diese ausgewählte Ausbreitungsrichtung dadurch definiert ist, dass das von den Pixeln (15) dieser Spalte ausgehende und mit dieser ausgewählten Ausbreitungsrichtung durch das optische Raster (13) fallende Licht in einen vorgegebenen zusammenhängenden Beobachtungsraum vor dem Bildschirm (11) fällt.

13. Autostereoskopischer Bildschirm (11) nach Anspruch 12, **dadurch gekennzeichnet, dass** die Winkelwerte den Spalten so zugeordnet sind, dass die Spalten auf Gruppen von jeweils n oder n+1 oder n-1 unmittelbar benachbarten Spalten verteilt sind, innerhalb derer die den Spalten der jeweiligen Gruppe zugeordneten Winkelwerte sich von Spalte zu Spalte um eine für alle Gruppen gleiche Winkeldifferenz unterscheiden, wobei die Winkelwerte, die den Spalten jeder dieser Gruppen zugeordnet sind, jeweils ein für alle Gruppen gleiches Intervall überspannen, das mindestens (n-1)-mal so groß ist wie die genannte Winkeldifferenz.

14. Autostereoskopischer Bildschirm (11) nach Anspruch 13, **dadurch gekennzeichnet, dass** zumindest einige der Spalten, die an einem Rand einer der genannten Gruppen von Spalten liegen, zusätzlich der sich an diesem Rand der Gruppe anschließenden benachbarten Gruppe von Spalten zugeordnet sind und dass diesen Spalten dementsprechend zwei Winkelwerte zugeordnet sind, die durch zwei der horizontalen Ausbreitungsrichtungen definiert sind, wobei die Steuereinheit (14) eingerichtet ist, für diese Spalten dementsprechend jeweils zwei Auszüge unter Zugrundelegung jeweils eines dieser beiden Winkelwerte zu berechnen und die Pixel (15) dieser Spalten jeweils mit einem gemittelten Helligkeitswert anzusteuern, der sich durch Mitteln von Helligkeitswerten ergibt, die durch diese beiden Auszüge definiert werden.

15. Autostereoskopischer Bildschirm (11) nach Anspruch 14, **dadurch gekennzeichnet, dass** die Steuereinheit (14) eingerichtet ist, die genannten gemittelten Helligkeitswerte für die Pixel (15) der Spalten, denen zwei Winkelwerte zugeordnet sind, jeweils zu ermitteln als Summe aus einem mit einem ersten Wichtungsfaktor gewichteten ersten Helligkeitswert und einem mit einem zweiten Wichtungsfaktor gewichteten zweiten Helligkeitswert, wobei der erste Helligkeitswert durch einen ersten der zwei Auszüge für das jeweilige Pixel (15) definiert ist und der zweite Helligkeitswert durch den zweiten dieser zwei Auszüge für dasselbe Pixel (15) definiert ist.

## Claims

1. A method for reproducing image information on an autostereoscopic screen (11), which has a pixel matrix (12) with a plurality of pixels (15) and also an optical grid (13) arranged in front of the pixel matrix (12), wherein the pixels (15) of the pixel matrix (12) are arranged such that they form a plurality of columns arranged equidistantly side by side with a column direction that is vertical or inclined relative to a vertical, and wherein the optical grid (13) has a group of strip-shaped structures oriented parallel to the columns and arranged equidistantly side by side and gives light originating from the pixels (15) least one defined propagation plane, which is spanned from a defined horizontal propagation direction and the column direction, wherein a period length (D) of the optical grid (13), said period length being defined by a lateral offset of adjacent strip-shaped structures, is greater by a factor n×Lₙ/(Lₙ+a) than a lateral offset (d) of the directly adjacent columns, wherein a denotes an effective distance between the pixel matrix (12) and the optical grid (13), Lₙ denotes a nominal viewing distance of the autostereoscopic screen (11), and n denotes an integer greater than two,
**characterized in that**
the method comprises the following steps:
- assigning an angle value and a location coordinate value to each of the specified columns, wherein the angle value is defined as a measure for an angle between a horizontal reference direction and the horizontal propagation direction or one of the horizontal propagation directions which is or are given to the light originating from the pixels (15) of the respective column by the optical grid (13), and wherein the location coordinate value specifies a position, in the lateral direction, of the respective column or of the strip-shaped structure of the optical grid (13), through which the light originating from the pixels (15) of this column falls,
- for each of the columns calculating an extract of an image by image synthesis, wherein this image is a parallel projection of a 3D scene to be reproduced having a projection direction that is defined by the angle corresponding to the angle value assigned to the respective column, and wherein the extract is defined in each case by a strip of this image that has a lateral position in this image corresponding to the location coordinate value assigned to the respective column,
- controlling the pixels (15) of the pixel matrix (12) in such a way that each of the columns has written into it the extract calculated for this column.

2. The method according to claim 1, **characterised in that** the calculation of the extracts includes the determination of brightness values of image points of the extracts, wherein the extracts are written into the columns of the pixel matrix (12) by controlling the pixels (15) forming the respective columns using the brightness values determined for the image points of the respective extract.

3. The method according to any of claims 1 or 2, **characterised in that** a number of more than n different angle values is assigned to the different columns, such that the extracts calculated for the columns are calculated from a corresponding number of more than n different parallel projections with a corresponding number of more than n different projection directions.

4. The method according to any of claims 1 to 3, **characterised in that** the projection directions of the parallel projections, of which the extracts are calculated for the different columns, each enclose an angle with a reference projection direction common for all of these parallel projections, which angle is exactly the same size as the angle corresponding to the angle value assigned to the respective column or is given by multiplying the latter angle by a proportionality factor common for all of these parallel projections.

5. The method according to any of claims 1 to 4, **characterised in that** the optical grid (13) gives the light originating from the pixels (15) of each column or from the pixels (15) of some of the columns a finite number of different propagation planes with accordingly different horizontal propagation directions, which are provided as a result of the fact that the light falls through different strip-shaped structures of the optical grid (13), wherein, in order to determine the angle value assigned to the respective column, a propagation direction is selected from these propagation directions, which selected propagation direction is defined **in that** the light originating from the pixels (15) of this column and falling with this propagation direction through the optical grid (13) falls into a predefined connected observation space in front of the screen (11).

6. The method according to claim 5, **characterised in that** the angle values are assigned to the columns such that the columns are distributed between groups of in each case n or n+1 or n-1 directly adjacent columns, within which the angle values assigned to the columns of the respective group differ from column to column by an angle difference identical for all groups, wherein the angle values assigned to the columns of each of these groups each span an interval that is at least (n-1) times as large as the specified angle difference.

7. The method according to claim 6, **characterised in that** at least some of the columns arranged at an edge of one of the specified groups of columns are additionally assigned to the adjacent group of columns adjoining this edge of the group, and two angle values are assigned accordingly to these columns, said angle values being defined by two of the horizontal propagation directions, wherein two extracts are calculated accordingly for each of these columns on the basis in each case of one of these two angle values, and wherein the pixels (15) of these columns are each controlled with an averaged brightness value, which is given by averaging brightness values defined by these two extracts.

8. An autostereoscopic screen (11), which has a pixel matrix (12) with a plurality of pixels (15), an optical grid (13) arranged in front of the pixel matrix (12), and a control unit (14) for controlling the pixel matrix (12),
wherein the pixels (15) of the pixel matrix (12) are arranged such that they form a plurality of columns arranged equidistantly side by side with a column direction that is vertical or inclined relative to a vertical,
wherein the optical grid (13) has a group of strip-shaped structures oriented parallel to the columns and arranged equidistantly side by side and gives light originating from the pixels (15) least one defined propagation plane, which is spanned from a defined horizontal propagation direction and the column direction, wherein a period length (D) of the optical grid (13), said period length being defined by a lateral offset of adjacent strip-shaped structures, is greater by a factor n×Lₙ/(Lₙ+a) than a lateral offset (d) of the directly adjacent columns, wherein a denotes an effective distance between the pixel matrix (12) and the optical grid (13), Lₙ denotes a nominal viewing distance of the autostereoscopic screen (11), and n denotes an integer greater than two,
and wherein the control unit (14) is configured to carry out the following steps:
- calculating or evaluating an assignment that assigns an angle value and a location coordinate value to each of the specified columns, wherein the angle value is defined as a measure for an angle between a horizontal reference direction and the horizontal propagation direction or one of the horizontal propagation directions which is or are given to the light originating from the pixels (15) of the respective column by the optical grid (13), and wherein the location coordinate value specifies a position, in the lateral direction, of the respective column or of the strip-shaped structure of the optical grid (13), through which the light originating from the pixels (15) of this column falls,
- for each of the columns calculating an extract of an image by image synthesis, wherein this image is a parallel projection of a 3D scene to be reproduced having a projection direction that is defined by the angle corresponding to the angle value assigned to the respective column, and wherein the extract is defined in each case by a strip of this image that has a lateral position in this image corresponding to the location coordinate value assigned to the respective column,
- controlling the pixels (15) of the pixel matrix (12) in such a way that each of the columns has written into it the extract calculated for this column.

9. The autostereoscopic screen (11) according to claim 8, **characterised in that** the control unit (14) is configured, when calculating the extracts, to determine brightness values of image points of the extracts and to write the extracts into the columns of the pixel matrix (12) by controlling the pixels (15) forming the respective column using the brightness values determined for the image points of the respective extract.

10. The autostereoscopic screen (11) according to any of claims 8 or 9, **characterised in that** the specified assignment assigns a number of more than n different angle values to the different columns, such that the control unit (14) is configured to calculate the extracts for the different columns of the pixel matrix (12) from a corresponding number of more than n different parallel projections with a corresponding number of more than n different projection directions.

11. The autostereoscopic screen (11) according to any of claims 8 to 10, **characterised in that** the control unit (14) is configured to calculate the extracts for the different columns such that the projection directions of the parallel projections, the extracts of which are those in question, each enclose an angle with a reference projection direction common for all of these parallel projections, which angle is exactly the same size as the angle that corresponds to the angle value assigned to the respective column or that is given by multiplying the latter angle by a proportionality factor common for all of these parallel projections.

12. The autostereoscopic screen (11) according to any of claims 8 to 11, **characterised in that** the optical grid (13) gives the light originating from the pixels (15) of each column or from the pixels (15) of some of the columns a finite number of different propagation planes with accordingly different horizontal propagation directions, which are provided as a result of the fact that the light falls through different strip-shaped structures of the optical grid (13), wherein the angle value assigned to the respective column is defined by a propagation direction selected from these propagation directions, wherein this selected propagation direction is defined **in that** the light originating from the pixels (15) of these columns and falling with this selected propagation direction through the optical grid (13) falls into a predefined connected observation space in front of the screen (11).

13. The autostereoscopic screen (11) according to claim 12, **characterised in that** the angle values are assigned to the columns such that the columns are distributed between groups of in each case n or n+1 or n-1 directly adjacent columns, within which the angle values assigned to the columns of the respective group differ from cotumn to column by an angle difference identical for all groups, wherein the angle values assigned to the columns of each of these groups each span an interval identical for all groups that is at least (n-1) times as large as the specified angle difference.

14. The autostereoscopic screen (11) according to claim 13, **characterised in that** at least some of the columns arranged at an edge of one of the specified groups of columns are additionally assigned to the adjacent group of columns adjoining this edge of the group, and two angle values are assigned to these columns, said angle values being defined by two of the horizontal propagation directions, wherein the control unit (14) is configured to calculate two extracts accordingly for each of these columns on the basis in each case of one of these two angle values and to control the pixels (15) of these columns in each case using an averaged brightness value, which is given by averaging brightness values defined by these two extracts.

15. The autostereoscopic screen (11) according to claim 14, **characterised in that** the control unit (14) is configured to determine the specified averaged brightness values for the pixels (15) of the columns to which two angle values are assigned in each case as the sum from a first brightness value weighted with a first weighting factor and a second brightness value weighted with a second weighting factor, wherein the first brightness value is defined by a first of the two extracts for the respective pixel (15) and the second brightness value is defined by the second of these two extracts for the same pixel (15).

## Revendications

1. Procédé de représentation d'informations graphiques sur un écran auto-stéréoscopique (11), qui comprend une matrice de pixels (12) avec une pluralité de pixels (15) ainsi qu'une trame optique (13) disposée devant la matrice de pixels (12), les pixels (15) de la matrice de pixels (12) étant disposés de façon à former une pluralité de fentes juxtaposées de manière équidistante avec une direction de fente verticale ou inclinée par rapport à une verticale et la trame optique (13) comprenant un groupe de structures en forme de bandes orientées parallèlement par rapport aux fentes et juxtaposées de manière équidistante et imposant à la lumière sortant des pixels (15) au moins un plan de propagation défini, qui s'étend à partir d'une direction de propagation horizontale définie et de la direction des fentes, une longueur de période (D) de la trame optique (13), définie par un décalage latéral de structures en forme de bandes adjacentes étant supérieure d'un facteur nxLₙ/(Lₙ+a) à un décalage latéral (d) des fentes immédiatement adjacentes, a étant une distance effective entre la matrice de pixels (12) et la trame optique (13), Lₙ étant un éloignement d'observation nominal de l'écran auto-stéréoscopique (11) et n étant un nombre entier supérieur à deux,
**caractérisé en ce que**
le procédé comprend les étapes suivantes :
- attribution d'une valeur angulaire et d'une valeur de coordonnée locale à chacune des fentes mentionnées, la valeur d'angle étant défini comme référence pour un angle entre une direction de référence horizontale et la direction de propagation horizontale ou une des directions de propagation horizontales, qui est ou sont imposées à la lumière sortant des pixels (15) de la fente correspondante, et la valeur de coordonnée locale indiquant, dans la direction latérale, une position de la fente correspondante ou de la structure en forme de bande de la trame optique (13) à travers laquelle tombe la lumière sortant des pixels (15) de cette fente,
- pour chacune des fentes, calcul d'un extrait d'une image par synthèse d'image, cette image étant une projection parallèle d'une scène 3D à représenter avec une direction de projection qui est définie par l'angle qui correspond à la valeur d'angle correspondant à la fente et l'extrait étant défini par une bande de cette image, qui a dans cette image une position latérale qui correspond à la valeur de coordonnée locale attribuée à la fente correspondante,
- contrôle des pixels (15) de la matrice de pixels (12) de façon à ce que l'extrait calculé pour cette fente soit inclus dans chacune des fentes.

2. Procédé selon la revendication 1, **caractérisé en ce que** le calcul des extraits contient la détermination de valeurs de luminosité de points d'image des extraits, les extraits étant inclus dans les fentes de la matrice de pixels (12), grâce au fait que les pixels (15) formant la fente correspondante sont contrôlés avec les valeurs de luminosité déterminée pour les points d'image de l'extrait correspondant.

3. Procédé selon l'une des revendications 1 ou 2, **caractérisé en ce que**, aux différentes fentes, sont attribuées un nombre supérieur à n de valeurs d'angles différentes, de façon à ce que les extraits calculés pour les fentes soient calculés à partir d'un nombre correspondant supérieur à n de projections parallèles différentes avec un nombre correspondant supérieur à n de directions de projection différentes.

4. Procédé selon l'une des revendications 1 à 3, **caractérisé en ce que** les directions de projection des projections parallèles, dont les extraits sont calculés pour les différentes fentes, forment chacune, avec une direction de projection de référence commune à toutes les projections parallèles, un angle qui est exactement égal à la valeur d'angle attribuée à la fente concernée ou qui résulte de la multiplication de l'angle mentionné en dernier avec un facteur de proportionnalité commun à toutes ces projections parallèles.

5. Procédé selon l'une des revendications 1 à 4, **caractérisé en ce que** la trame optique (13) impose à la lumière sortant des pixels (15) de chaque fente ou des pixels (15) de certaines des fentes un nombre fini de plans de propagation différents avec par conséquent différentes directions de propagation horizontales, qui résultent du fait que la lumière tombe à travers différentes structures en forme de bandes de la trame optique (13), moyennant quoi, pour la détermination de la valeur d'angle attribuée à la fente concernée, on sélectionne, parmi ces directions de propagation, une direction de propagation qui est définie par le fait que la lumière sortant des pixels (15) de cette fente ou tombant, avec cette direction de propagation, à travers la trame optique (13), tombe dans un espace d'observation cohérent prédéterminé devant l'écran (11).

6. Procédé selon la revendication 5, **caractérisé en ce que** les valeurs d'angles sont attribuées aux fentes de façon à ce que les fentes soient réparties sur des groupes de n ou n+1 ou n-1 fentes immédiatement adjacentes, à l'intérieur desquels les valeurs d'angles attribuées aux fentes du groupe concerné sont différentes d'une fente à l'autre d'une différence d'angle identique pour tous les groupes, les valeurs d'angles qui sont attribuées aux fentes de chacun de ces groupes s'étendant sur un intervalle qui est au moins (n-1) fois aussi grand que la différence d'angle mentionnée.

7. Procédé selon la revendication 6, **caractérisé en ce qu'**au moins certaines des fentes qui se trouvent au niveau d'un bord d'un des groupes de fentes mentionnés, sont attribuées en outre au groupe de fentes adjacent suivant ce bord du groupe et **en ce que**, à ces fentes sont attribuées par conséquent deux valeurs d'angles qui sont définies par deux des directions de propagation horizontales, moyennant quoi, pour ces fentes, deux extraits étant par conséquent calculés sur la base d'une de ces deux valeurs d'angles et les pixels (15) de ces fentes étant contrôlés avec une valeur de luminosité moyennée qui résulte du calcul de la moyenne des valeurs de luminosité définies par ces deux extraits.

8. Écran auto-stéréoscopique (11) qui comprend une matrice de pixels (12) avec une pluralité de pixels (15), une trame optique (13) disposée devant la matrice de pixels (12) et une unité de commande (14) pour le contrôle de la matrice de pixels (12),
les pixels (15) de la matrice de pixels (12) étant disposés de façon à former une pluralité de fentes juxtaposées de manière équidistante avec une direction de fente verticale ou inclinée par rapport à une verticale,
la trame optique (13) comprenant un groupe de structures en forme de bandes orientées parallèlement par rapport aux fentes et juxtaposées de manière équidistante et imposant à la lumière sortant des pixels (15) au moins un plan de propagation défini, qui s'étend à partir d'une direction de propagation horizontale définie et de la direction des fentes, une longueur de période (D) de la trame optique (13), définie par un décalage latérale de structures en forme de bandes adjacentes étant supérieure d'un facteur nxLₙ/(Lₙ+a) à un décalage latéral (d) des fentes immédiatement adjacentes, a étant une distance effective entre la matrice de pixels (12) et la trame optique (13), Lₙ étant un éloignement d'observation nominal de l'écran auto-stéréoscopique (11) et n étant un nombre entier supérieur à deux,
et l'unité de commande (14) étant conçue pour l'exécution des étapes suivantes :
- calcul ou analyse d'une attribution, qui attribue à chacune des fentes mentionnées une valeur d'angle et une valeur de coordonnée locale, la valeur d'angle étant définie comme référence pour un angle entre une direction de référence horizontale et la direction de propagation horizontale ou une des directions de propagation horizontales, qui est ou sont imposées à la lumière sortant des pixels (15) de la fente correspondante, et la valeur de coordonnée locale indiquant, dans la direction latérale, une position de la fente correspondante ou de la structure en forme de bande de la trame optique (13) à travers laquelle tombe la lumière sortant des pixels (15) de cette fente,
- pour chacune des fentes, calcul d'un extrait d'une image par synthèse d'image, cette image étant une projection parallèle d'une scène 3D à représenter avec une direction de projection qui est définie par l'angle qui correspond à la valeur d'angle correspondant à la fente et l'extrait étant défini par une bande de cette image, qui a dans cette image une position latérale qui correspond à la valeur de coordonnée locale attribuée à la fente correspondante,
- contrôle des pixels (15) de la matrice de pixels (12) de façon à ce que l'extrait calculé pour cette fente soit inclus dans chacune des fentes.

9. Écran auto-stéréoscopique (11) selon la revendication 8, **caractérisé en ce que** l'unité de commande (14) est conçue pour déterminer, lors du calcul des extraits, des valeurs de luminosité de points d'image des extraits et inclure les extraits dans les fentes de la matrice de pixels (12) par contrôle des pixels (15) formant les fentes de la matrice de pixels (12) avec les valeurs de luminosité déterminée pour les points d'image de l'extrait concerné.

10. Écran auto-stéréoscopique (11) selon l'une des revendications 8 ou 9, **caractérisé en ce que** l'attribution mentionnée attribue aux différentes fentes un nombre supérieur à n de valeurs d'angles différentes, de façon à ce que l'unité de commande (14) soit conçue pour calculer les extraits pour les différentes fentes de la matrice de pixels (12) à partir d'un nombre correspondant supérieur à n de projections parallèles différentes avec un nombre correspondant supérieur à n de directions de projection différentes.

11. Écran auto-stéréoscopique (11) selon l'une des revendications 8 à 10, **caractérisé en ce que** l'unité de commande (14) est conçue pour calculer les extraits pour les différentes fentes de façon à ce que les directions de projection des projections parallèles, dont les extraits font partie, forment, avec une direction de projection de référence commune à toutes ces projections parallèles, un angle qui est exactement égal à l'angle qui correspond à la valeur d'angle attribuée à la fente concernée ou qui résulte de la multiplication de l'angle mentionné en dernier avec un facteur de proportionnalité commun à toutes ces projections parallèles.

12. Écran auto-stéréoscopique (11) selon l'une des revendications 8 à 11, **caractérisé en ce que** la trame optique (13) impose à la lumière sortant des pixels (15) de chaque fente ou des pixels (15) de certaines des fentes un nombre fini de plans de propagation différents avec par conséquent des directions de propagation horizontales différentes, qui résultent du fait que la lumière tombe à travers différentes structures en forme de bandes de la trame optique (13), la valeur d'angle attribuée à la fente concernée étant définie par une direction de propagation sélectionnée par ces directions de propagation, cette direction de propagation sélectionnée étant définie par le fait que la lumière sortant des pixels (15) de cette fente et tombant, avec cette direction de propagation sélectionnée, à travers la trame optique (13), tombe dans un espace d'observation cohérent prédéterminé devant l'écran (11).

13. Écran auto-stéréoscopique (11) selon la revendication 12, **caractérisé en ce que** les valeurs d'angles sont attribuées aux fentes de façon à ce que les fentes soient réparties sur des groupes de n ou n+1 ou n-1 fentes immédiatement adjacentes, à l'intérieur desquels les valeurs d'angles attribuées au groupe concerné diffèrent d'une fente à l'autre d'une différence d'angle identique pour tous les groupes, les valeurs d'angles qui sont attribuées aux fentes de chacun de ces groupes s'étendant sur un intervalle identique pour tous les groupes, qui est au moins (n-1) fois aussi grand que la différence d'angle mentionnée.

14. Écran auto-stéréoscopique (11) selon la revendication 13, **caractérisé en ce qu'**au moins certaines des fentes qui se trouvent au niveau d'un bord d'un des groupes de fentes mentionnés, sont attribuées en outre au groupe de fentes adjacent suivant ce bord du groupe et **en ce que**, à ces fentes sont attribuées par conséquent deux valeurs d'angles qui sont définies par deux des directions de propagation horizontales, l'unité de commande (14) étant conçue pour calculer, par conséquent, pour ces fentes, deux extraits sur la base d'une de ces valeurs d'angles et pour contrôler les pixels (15) de ces fentes avec une valeur de luminosité moyennée, qui résulte du calcul de la moyenne des valeurs de luminosité, qui sont définies par ces deux extraits.

15. Écran auto-stéréoscopique (11) selon la revendication 14, **caractérisé en ce que** l'unité de commande (14) est conçue pour déterminer les valeurs de luminosité moyennées mentionnées pour les pixels (15) des fentes, auxquels sont attribuées deux valeurs d'angles, en tant que somme d'une première valeur de luminosité pondérée par un premier facteur de pondération et une deuxième valeur de luminosité pondérée par un deuxième facteur de pondération, la première valeur de luminosité étant définie par un premier des deux extraits pour le pixel (15) concerné et la deuxième valeur de luminosité étant définie par le deuxième de ces deux extraits pour ce même pixel (15).
